(19)

**Europäisches Patentamt**
**European Patent Office**
**Office européen des brevets**

(11) **EP 1 708 319 B1**

(12) **EUROPÄISCHE PATENTSCHRIFT**

(45) Veröffentlichungstag und Bekanntmachung des Hinweises auf die Patenterteilung:
**06.07.2011 Patentblatt 2011/27**

(21) Anmeldenummer: **06006768.3**

(22) Anmeldetag: **30.03.2006**

(51) Int Cl.:
*H01S 3/0941* (2006.01)     *H01S 3/109* (2006.01)
*H01S 3/06* (2006.01)     *H01S 3/04* (2006.01)
*H01S 3/16* (2006.01)     *H01S 3/04* (2006.01)
*H01S 3/16* (2006.01)

(54) **Laservorrichtung**

Laser device

Dispositif laser

(84) Benannte Vertragsstaaten:
**DE**

(30) Priorität: **31.03.2005 DE 102005015148**

(43) Veröffentlichungstag der Anmeldung:
**04.10.2006 Patentblatt 2006/40**

(73) Patentinhaber: **OSRAM Opto Semiconductors GmbH**
**93055 Regensburg (DE)**

(72) Erfinder:
- **Kühnelt, Michael**
  **93051 Regensburg (DE)**
- **Schwarz, Thomas**
  **93055 Regensburg (DE)**
- **Steegmüller, Ulrich**
  **93055 Regensburg (DE)**
- **Singer, Frank**
  **93128 Regenstauf (DE)**

(74) Vertreter: **Epping - Hermann - Fischer Patentanwaltsgesellschaft mbH**
**Ridlerstrasse 55**
**80339 München (DE)**

(56) Entgegenhaltungen:
**EP-A- 1 204 182     US-A- 5 187 714**
**US-A- 5 351 259     US-A1- 2002 186 731**

- **ROSE T S ET AL: "Efficient collection and manipulation of laser diode output using refractive micro-optics" PROCEEDINGS OF THE SPIE - THE INTERNATIONAL SOCIETY FOR OPTICAL ENGINEERING USA, Bd. 2383, 1995, Seiten 273-277, XP002437489 ISSN: 0277-786X**
- **HARRISON J ET AL: "THERMAL MODELING FOR MODE-SIZE ESTIMATION IN MICROLASERS WITH WITH APPLICATION TO LINEAR ARRAYS IN ND:YAG AND TM,HO:YLF" IEEE JOURNAL OF QUANTUM ELECTRONICS, IEEE SERVICE CENTER, PISCATAWAY, NJ, US, Bd. 30, Nr. 11, 1. November 1994 (1994-11-01), Seiten 2628-2633, XP000478013 ISSN: 0018-9197**

## Beschreibung

Es wird eine Laservorrichtung angegeben.

Die Druckschriften US-A-5 351 259 und EP-A-1 204 182 beschreiben jeweils eine Laservorrichtung gemäß dem Oberbegriff des Patentanspruchs 1.

Eine zu lösende Aufgabe der Erfindung besteht darin, eine Laservorrichtung anzugeben, die elektromagnetische Strahlung erhöhter Ausgangsleistung und bevorzugt erhöhter Strahlqualität erzeugt.

Diese Aufgabe wird erfindungsgemäß mit einer Laservorrichtung nach Patentanspruch 1 gelöst.

Die Laservorrichtung weist eine Kristallanordnung auf. Die Kristallanordnung umfasst wenigstens zwei Kristalle.

Beispielsweise sind die Kristalle der Anordnung an einander zugewandten Endflächen miteinander verbunden. Beispielsweise können die Kristalle der Kristallanordnung miteinander verklebt oder aneinander gebondet sein. Die Kristalle bilden dann einen Kristallverbund.

Dabei ist die Verbindung zwischen den Kristallen der Kristallanordnung bevorzugt dergestalt ausgebildet, dass elektromagnetische Strahlung - beispielsweise Laserstrahlung -, die die Kristallanordnung durchstrahlt, ohne nennenswerte Verluste oder Richtungsänderung durch die Verbindungsfläche von einem Kristall in den benachbarten Kristall gelangen kann. Das heißt, an der Grenzfläche zwischen zwei Kristallen der Kristallanordnung findet kaum oder gar keine Reflexion, Absorption oder Brechung von Strahlung statt.

Es ist aber auch möglich, dass die Kristalle der Kristallanordnung beabstandet zueinander angeordnet sind. Das heißt, einander zugewandte Endflächen der Kristalle können dann einen Abstand voneinander aufweisen. Bevorzugt verlaufen die Endflächen dabei parallel zueinander.

Beispielsweise sind die Kristalle der Anordnung auf einem gemeinsamen Träger angeordnet.

Die Kristallanordnung der erfindungsgemäßen Laservorrichtung enthält einen Laser-Gain-Kristall. Der Gain-Kristall ist geeignet, bei Pumpen des Gain-Kristalls Laserstrahlung zu erzeugen. Beispielsweise ist der Gain-Kristall geeignet, Laserstrahlung im nahen Infrarotbereich zu erzeugen.

Die Kristallanordnung enthält einen optisch nicht linearen Frequenzkonversionskristall. Der Frequenzkonversionskristall ist geeignet, zumindest einen Teil der elektromagnetischen Strahlung, die durch ihn tritt, Frequenz zu konvertieren. Das heißt, die Frequenz zumindest eines Teils der durch den Frequenzkonversionskristall tretenden Strahlung wird beim Durchtritt durch den Kristall verändert, beispielsweise erhöht.

Die Laservorrichtung weist eine Pumpquelle auf, die geeignet ist, wenigstens zwei räumlich voneinander getrennte Pumpstrahlen in die Kristallanordnung einzukoppeln. Beispielsweise strahlen die Pumpstrahlen dabei in einen Gain-Kristall der Kristallanordnung ein.

Bevorzugt ist die Pumpquelle derart relativ zur Kristallanordnung angeordnet, dass die Pumpquelle dem Gain-Kristall der Kristallanordnung zugewandt ist. Bevorzugt ist die Pumpquelle geeignet, die Pumpstrahlen gleichzeitig in die Kristallanordnung einzukoppeln. Das heißt, bevorzugt werden mehrere von der Pumpquelle emittierte Pumpstrahlen gleichzeitig an unterschiedlichen Stellen in den Gain-Kristall der Kristallanordnung eingekoppelt. Die Pumpstrahlen sind dabei geeignet, den Gain-Kristall optisch zu pumpen.

Gemäß zumindest einer Ausführungsform der Laservorrichtung weist die Laservorrichtung eine Kristallanordnung auf, die einen Laser-Gain-Kristall und einen optisch nicht linearen Frequenzkonversionskristall umfasst. Weiter weist die Laservorrichtung eine optische Pumpquelle auf, die geeignet ist, wenigstens zwei räumlich voneinander getrennte Pumpstrahlen in die Kristallanordnung einzukoppeln.

Gemäß zumindest einer Ausführungsform bildet die Kristallanordnung einen Resonator für wenigstens zwei Laserstrahlen. Beispielsweise Endflächen der Kristallanordnung können dazu reflektierend ausgebildet sein. Die Kristallanordnung bildet dann einen Plan-Plan-Resonator für Strahlung in der Kristallanordnung. Die Kristallanordnung stellt vorzugsweise für wenigstens zwei räumlich voneinander getrennte Laserstrahlen in der Kristallanordnung einen Resonator dar. Dabei stellt die Kristallanordnung bevorzugt für den nicht frequenzkonvertierten Anteil der Strahlung in der Kristallanordnung, also für Strahlung die im Gain-Kristall erzeugt wird, einen Laserresonator dar.

Beispielsweise ist der Resonator durch die Endfläche des Gain-Kristalls, durch die Pumpstrahlung in die Kristallanordnung eingekoppelt werden kann, und die Endfläche des Frequenzkonversionskristalls gebildet, durch die Laserstrahlung aus der Kristallanordnung ausgekoppelt werden kann. Bevorzugt tritt durch die Endfläche des Frequenzkonversionskristalls zu einem überwiegenden Anteil frequenzkonvertierte elektromagnetische Strahlung, vorzugsweise Laserstrahlung, aus. Bevorzugt bilden die Kristalle der Anordnung in diesem Ausführungsbeispiel einen Kristallverbund. Sind die Kristalle nicht miteinander verbunden, dann sind einander zugewandte Endflächen der Kristalle der Anordnung bevorzugt sowohl für die im Gain-Kristall erzeugte Strahlung der Grundwellenlänge, als auch für die frequenzkonvertierte Strahlung hochwertig entspiegelt.

Beispielsweise weist der Gain-Kristall zumindest an seiner Endfläche, durch die Pumpstrahlung in die Kristallanordnung eingekoppelt werden kann, eine Beschichtung auf. Die Beschichtung ist für die Pumpstrahlen bevorzugt hoch transmittierend. Für die im Gain-Kristall angeregte Grundwelle ist die Beschichtung bevorzugt hoch reflektierend. Weiter ist die Beschichtung auch für den im Frequenzkonversionskristall frequenzkonvertierten Anteil der Strahlung vorzugsweise hoch reflektierend.

Zumindest die Endfläche der Kristallanordnung, die zur Auskopplung elektromagnetischer Strahlung vorgesehen ist, - zum Beispiel die der Einkoppelfläche des Gain-Kristalls abgewandte Endfläche des Frequenzkonversionskristalls - kann eine zweite Beschichtung aufweisen. Die zweite Beschichtung ist hoch reflektierend für die im Gain-Kristall erzeugte Grundwelle und hoch transmittierend für die frequenzkonvertierte Strahlung. Damit bildet die beschichtete Kristallanordnung einen Resonator für die elektromagnetische Strahlung der Grundwellenlänge. Frequenzkonvertierte Strahlung kann zum überwiegenden Teil durch die mit der zweiten Beschichtung versehene Endfläche der Kristallanordnung austreten.

Gemäß zumindest einer Ausführungsform der Laservorrichtung ist für jeden Laserstrahl in der Kristallanordnung eine thermische Linse vorgesehen. Das heißt, der durch die Kristallanordnung gebildete Plan-Plan-Resonator ist mittels jeweils einer thermischen Linse für jeden Laserstrahl in der Kristallanordnung stabilisiert. Aufgrund der lokalen Erwärmung der Kristallanordnung durch einen Strahl in der Kristallanordnung finden also im Bereich des Strahls Brechungsindexänderungen statt. Die Gebiete mit unterschiedlichem Brechungsindex bilden eine Gradientenlinse radial um den Strahl, die diesen stabilisiert.

Mit anderen Worten induziert jeder Laserstrahl in der Kristallanordnung eine thermische Linse, deren Sammelwirkung den Resonator stabilisiert und den Strahldurchmesser im Resonator auf eine laterale Ausdehnung verringert, die der des Pumpstrahls ähnlich ist. Die einzelnen Laserstrahlen in der Kristallanordnung sind dabei ausreichend voneinander beabstandet, sodass sich zu jedem Strahl eine den Strahl stabilisierende thermische Linse ausbilden kann. Das heißt, der Abstand der Laserstrahlen voneinander ist derart gewählt, dass thermische Störungen der thermischen Linsen benachbarter Strahlen untereinander höchstens gering sind. Dabei ist es möglich, dass die Achsen der Laserstrahlen parallel zueinander verlaufen. Es ist aber auch möglich, dass die Richtungen der Achsen der einzelnen Strahlen Winkel miteinander einschließen.

Gemäß zumindest einer Ausführungsform der Laservorrichtung entspricht die Zahl der aus der Kristallanordnung ausgekoppelten Laserstrahlen der Zahl der in die Kristallanordnung eingekoppelten Pumpstrahlen. Das heißt, jeder Pumpstrahl pumpt genau einen Laserstrahl im Gain-Kristall der Kristallanordnung. Ein Teil jedes Laserstrahls wird im Frequenzkonversionskristall frequenzkonvertiert und tritt aus der Kristallanordnung aus. Die Zahl der aus der Kristallanordnung austretenden frequenzkonvertierten Laserstrahlen ist dann durch die Zahl der Pumpstrahlen bestimmt.

Gemäß zumindest einer Ausführungsform ist der Frequenzkonversionskristall geeignet, die Frequenz eines Teils der in ihn eingekoppelten elektromagnetischen Strahlung zu erhöhen. Bevorzugt ist der Frequenzkonversionskristall geeignet die Frequenz eines Teils der ihn durchstrahlenden elektromagnetischen Strahlung zumindest zu verdoppeln.

Gemäß zumindest einer Ausführungsform der Laservorrichtung umfasst der Gain-Kristall wenigstens einen der folgenden Kristalle: Neodym-dotierter Yttrium-vanadat-Kristall (Nd:YVO$_4$), Neodym-dotierter Yttrium-Aluminium-Granat-Kristall (Nd:YAG). Der Gain-Kristall ist geeignet elektromagnetische Strahlung im nahen Infrarotbereich zu erzeugen und emittiert Strahlung beispielsweise bei einer Wellenlänge von circa 1064 Nanometer. Bevorzugt wird der Gain-Kristall mit elektromagnetischer Strahlung kleinerer Wellenlängen beispielsweise 808 Nanometer optisch gepumpt.

Gemäß zumindest einer Ausführungsform der Laservorrichtung umfasst der Frequenzkonversionskristall zumindest einen der folgenden Kristalle: stöchiometrisches LiNbO$_3$ (SLN), stöchiometrisches LiTaO$_3$ (SLT), KTP (KTiOPO$_4$), RTP (RbTiOPO$_4$), KTA (KTiOAsO$_4$), RTA (RbTiOAsO$_4$), CTA (CsTiOAsO$_4$).

Bevorzugt ist der Frequenzkonversionskristall zur Frequenzverdoppelung der ihn durchtretenden Strahlung geeignet.

Gemäß zumindest einer Ausführungsform der Laservorrichtung ist die Laservorrichtung geeignet, elektromagnetische Strahlung mit einer Wellenlänge kleiner 600 Nanometer zu erzeugen. Bevorzugt ist die Laservorrichtung geeignet elektromagnetische Strahlung im grünen, blauen oder ultravioletten Spektralbereich zu erzeugen.

Gemäß zumindest einer Ausführungsform der Laservorrichtung ist die Gesamtleistung der aus der Laservorrichtung ausgekoppelten Laserstrahlen größer gleich 0,5 Watt. Das heißt, die Leistung der einzelnen ausgekoppelten frequenzkonvertierter Strahlen summiert sich zu wenigstens 0,5 Watt.

Gemäß zumindest einer Ausführungsform der Laservorrichtung ist der Strahlengang der Pumpstrahlen zwischen Pumpquelle und Kristallanordnung frei von optischen Elementen. Beispielsweise sind Pumpquelle und Kristallanordnung dazu derart voneinander beabstandet, dass es keiner Kollimation der Pumpstrahlung vor Eintritt in die Kristallanordnung bedarf. Der Abstand zwischen Pumpquelle und Kristallanordnung beträgt dann bevorzugt maximal 100 μm, besonders bevorzugt maximal 50 μm. Die laterale Ausdehnung eines Pumpstrahls im Gain-Kristall, das heißt, die Ausdehnung des Pumpstrahls in Richtungen quer zu Strahlrichtung, ist mittels Abstand von Pumpstrahlquelle und Gain-Kristall einstellbar. Je größer der Abstand ist, desto größer ist der Pumpstrahl im Gain-Kristall.

Gemäß zumindest einer Ausführungsform der Laservorrichtung ist zwischen Pumpquelle und Kristallanordnung eine plan-konvexe asphärische Zylinderlinse angeordnet. Die Linse ist bevorzugt zur Fast-Axis-Kollimation der Pumpstrahlung geeignet (FAC-Linse). Sie weist bevorzugt eine plane Lichteintrittsfläche und eine asphärisch gekrümmte Lichtaustrittsfläche auf. Die Linse kann beispielsweise ein auf GaP-basierendes Halbleitermaterial enthalten oder aus einem solchen Halbleitermaterial bestehen.

Die Linse kann an ihrer Lichteintrittsfläche und/ oder ihrer Lichtaustrittsfläche eine Antireflexionsbeschichtung aufweisen.

Gemäß zumindest einer Ausführungsform der Laservorrichtung ist zwischen der Zylinderlinse und der Kristallanordnung im Strahlengang eines jeden Pumpstrahls eine weitere Linse angeordnet. Die weiteren Linsen sind beispielsweise plan-konvexe Zylinderlinsen. Bevorzugt sind die weiteren Linsen zur Slöw-Axis-Kollimation und/oder Fokussierung der Pumpstrahlung geeignet (SAC-Linsen). Beispielsweise ist die Slow-Axis-Ebene durch die Ebene der Pumpstrahlen, die von der Pumpquelle emittiert werden, gegeben. Die Fast-Axis-Ebene ist dann durch die senkrecht dazu stehende Ebene gegeben. Bei den Slow-Axis-Linsen kann es sich zum Beispiel um plan-konvexe Glaslinsen mit planer Lichteintrittsfläche und sphärisch konvex gewölbter Lichtaustrittsfläche handeln. Die Slow-Axis-Linsen können an ihren Lichteintrittsflächen und/oder ihren Lichtaustrittsflächen eine Antireflexionsbeschichtung aufweisen.

Gemäß zumindest einer Ausführungsform der Laservorrichtung sind Fast-Axis-Linse und Slow-Axis-Linsen in einen gemeinsamen Linsenstab integriert. Beispielsweise sind die Linsen dazu miteinander verklebt oder aneinander gebondet. Vorzugsweise weisen dann nur die Lichteintrittsfläche der Fast-Axis-Linse und die Lichtaustrittsfläche der Slow-Axis-Linsen eine Antireflexionsbeschichtung auf.

Gemäß zumindest einer Ausführungsform der Laservorrichtung umfasst die Pumpquelle einen Breitstreifendiodenlaser (Diodenlaserbarren). Bevorzugt ist die Pumpquelle geeignet, wenigstens zwei Laserstrahlen zu erzeugen, die parallel zueinander verlaufen. Das heißt, bevorzugt verlaufen die Achsen der Pumpstrahlen parallel zueinander. Vorzugsweise ist die Pumpquelle geeignet, die Laserstrahlen gleichzeitig zu erzeugen. Die Laserstrahlen können dabei von der Pumpquelle sowohl im cw-Betrieb als auch im Pulsbetrieb erzeugt werden. Besonders bevorzugt ist die Pumpquelle geeignet, eine Vielzahl von parallel zueinander verlaufenden Laserstrahlen - zum Beispiel fünf oder mehr Laserstrahlen - gleichzeitig zu erzeugen.

Gemäß zumindest einer Ausführungsform der Laservorrichtung beträgt der Durchmesser eines von der Pumpstrahlquelle erzeugten Laserstrahls maximal 150 $\mu$m. Bevorzugt beträgt der Strahldurchmesser maximal 100 $\mu$m, besonders bevorzugt maximal 50 $\mu$m.

Die Kristallanordnung der erfindungsgemäßen Laservorrichtung weist zwischen jeweils zwei in die Kristallanordnung eingekoppelten Pumpstrahlen einen Sägegraben auf. Der Sägegraben verläuft bevorzugt parallel zu den Pumpstrahlen. Besonders bevorzugt erstrecken sich Sägegräben über die gesamte Länge der Kristallanordnung. Die Sägegräben sind geeignet, die einzelnen Laserstrahlen im durch die Kristallanordnung gebildeten Resonator thermisch voneinander zu entkoppeln. Das heißt, die Sägegräben tragen dazu bei, dass die den Resonator stabilisierenden thermischen Linsen nicht durch thermische Störungen beispielsweise durch benachbarte Strahlen im Resonator negativ beeinflusst werden. Je tiefer und breiter die Sägegräben dabei gewählt sind, desto besser ist die thermische Entkopplung und desto geringer kann der Abstand benachbarter Strahlen gewählt sein. Der Abstand der Sägegräben richtet sich dabei nach dem Abstand der Pumpstrahlen. Bevorzugt beträgt der Abstand der Sägegräben zwischen 350 und 550 $\mu$m, besonders bevorzugt zwischen 400 und 500 $\mu$m. Die Breite der Sägegräben beträgt bevorzugt zwischen 100 und 200 $\mu$m, besonders bevorzugt zwischen 125 und 175 $\mu$m, beispielsweise etwa 150 $\mu$m.

Gemäß zumindest einer Ausführungsform der Laservorrichtung ist die Kristallanordnung auf einem Träger angeordnet, der zumindest eines der folgenden Materialen enthält: Kupfer, Kupferverbundwerkstoff (z.B. DBC - direct bonded copper), Silizium. Weiter ist es möglich, dass der Träger ein anderes, gut Wärme leitendes Material enthält oder aus einem solchen gebildet ist.

Bevorzugt ist zwischen Kristallanordnung und Träger zumindest eines der folgenden Befestigungsmittel angeordnet: Klebstoff, Weichlot, Hartlot. Bevorzugt ist die Kristallanordnung mittels des Befestigungsmittels mechanisch fest mit dem Träger verbunden.

Gemäß zumindest einem Ausführungsbeispiel der Laservorrichtung weist der Träger zumindest eine Ausnehmung auf. Bei der Ausnehmung kann es sich beispielsweise um einen Graben handeln, der im Querschnitt U- oder V-förmig ausgebildet ist. Vorzugsweise ist die Ausnehmung in Form und Größe geeignet, die Kristallanordnung zumindest teilweise aufzunehmen. Das bedeutet, die Ausnehmung ist beispielsweise so tief, dass ein Teil der Kristallanordnung in der Ausnehmung angeordnet ist und ein anderer Teil der Kristallanordnung den Rand der Ausnehmung überragt. Die Kristallanordnung kann dabei mittels eines der weiter oben beschriebenen Befestigungsmittel in der Ausnehmung des Trägers befestigt sein.

Gemäß zumindest einem Ausführungsbeispiel der Laservorrichtung weist das Wärmeleitelement zumindest eine Ausnehmung auf. Bei der Ausnehmung kann es sich beispielsweise um einen Graben handeln, der im Querschnitt U- oder V-förmig ausgebildet ist. Vorzugsweise ist die Ausnehmung in Form und Größe geeignet, die Kristallanordnung zumindest teilweise aufzunehmen. Das heißt, die Ausnehmung ist beispielsweise so tief ausgebildet, dass ein Teil der Kristallanordnung in der Ausnehmung angeordnet ist und ein Teil der Kristallanordnung den Rand der Ausnehmung überragt. Die Kristallanordnung kann beispielsweise mittels eines der weiter oben beschriebenen Befestigungsmittel in der Ausnehmung befestigt sein.

Gemäß zumindest einer Ausführungsform der Laservorrichtung ist in die Sägegräben der Kristallanordnung ein Füllmaterial eingebracht. Vorzugsweise handelt es sich bei dem Füllmaterial um ein Befestigungsmittel, mit dem die Kristallanordnung am Träger und/oder am Wärmeleitelement mechanisch befestigt ist. Insbesondere eignet sich beispielsweise ein Epoxidmaterial mit Wärme leitenden Füllstoffen wie etwa Metallpartikeln als ein solches Füllmaterial.

Gemäß zumindest einer Ausführungsform der Laservorrichtung weist der Träger und/oder das Wärmeleitelement zumindest einen Vorsprung auf, der beispielsweise kammartig ausgebildet ist. Der Vorsprung ist vorzugsweise geeignet, in einen Sägegraben der Kristallanordnung einzugreifen. Vorzugsweise ist der kammartige Vorsprung im Sägegraben mittels eines weiter oben beschriebenen Füllmaterials oder eines oben beschriebenen Befestigungsmittels mechanisch befestigt.

Vorzugsweise entspricht die Zahl der Vorsprünge des Trägers und/oder des Wärmeleitelements wenigstens der Zahl der Sägegräben der Kristallanordnung. Bevorzugt greift in jeden Sägegraben genau ein Vorsprung ein. Besonders bevorzugt erstreckt sich jeder Vorsprung über die gesamte Länge des zugehörigen Sägegrabens, sodass in jeden Sägegraben der Kristallanordnung ein Vorsprung eingreift.

Gemäß zumindest einer Ausführungsform der Laservorrichtung ist auf der Kristallanordnung ein Wärmeleitelement angeordnet. Beispielsweise ist das Wärmeleitelement auf die dem Träger abgewandte Oberfläche angeordnet. Bevorzugt enthält das Wärmeleitelement zumindest eines der folgenden Materialen oder ist aus zumindest einem dieser Materialien gebildet: Kupfer, Kupferverbundwerkstoff (z.B. DBC - direct bonded copper), Silizium. Weiter ist es möglich, dass das Wärmeleitelement ein anderes, gut Wärme leitendes Material enthält oder aus einem solchen gebildet ist. Bevorzugt ist zwischen Kristallanordnung und Wärmeleitelement zumindest eines der folgenden Befestigungsmittel angeordnet: Klebstoff, Weichlot, Hartlot. Besonders bevorzugt ist die Kristallanordnung mittels des Befestigungsmittels mechanisch fest mit dem Wärmeleitelement verbunden.

Gemäß zumindest einer Ausführungsform der Laservorrichtung ist der Kristallanordnung zumindest ein Konkavspiegel nachgeordnet. Das heißt, beispielsweise der Strahlungsaustrittsfläche des Frequenzkonversionskristalls ist ein Konkavspiegel nachgeordnet, dessen Wölbung vom Frequenzkonversionskristall weg gerichtet ist. Die Strahlungsaustrittsfläche des Frequenzkonversionskristalls ist in diesem Fall für die im Gain-Kristall erzeugte Laserstrahlung der Grundwellenlänge hoch transmittierend. Der Konkavspiegel ist bevorzugt für die Strahlung der Grundwellenlänge hoch reflektierend und für den frequenzkonvertierten Anteil der Strahlung hoch transmittierend. Bevorzugt bilden der Konkavspiegel und die der Pumpquelle zugewandte Strahlungseintrittsfläche des Gain-Kristalls einen Resonator für die im Gain-Kristall erzeugte Laserstrahlung. Beispielsweise ist dabei jedem Laserstrahl genau ein Konkavspiegel zugeordnet ist. Zum Beispiel können die Konkavspiegel als ein zusammenhängender Streifen ausgebildet sein. Das heißt, sie sind integral, das heißt, in einem Stück gefertigt.

Bevorzugt findet die beschriebene Laservorrichtung in einem der folgenden Geräte Verwendung: Druckmaschine, Belichtungsanlage, Kopierer, Scanner, Projektor, Anzeigevorrichtung.

Im Folgenden wird die hier beschriebene Laservorrichtung anhand von Ausführungsbeispielen und den dazugehörigen Figuren näher erläutert.

In den Ausführungsbeispielen und Figuren sind gleiche oder gleich wirkende Bestandteile jeweils mit den gleichen Bezugzeichen versehen. Die dargestellten Elemente sind nicht als maßstabsgerecht anzusehen, vielmehr können einzelne Elemente zum besseren Verständnis übertrieben groß dargestellt sein.

Figur 1A zeigt eine schematische Aufsicht auf ein erstes nicht erfindungsgemäßes Ausführungsbeispiel einer Laservorrichtung, das das Verständnis der Erfindung erleichtert.

Figur 1B zeigt eine schematische Schnittdarstellung des ersten Ausführungsbeispiels der Laservorrichtung.

Figur 1C zeigt eine schematische Aufsicht auf eine erste nicht erfindungsgemäße Abwandlung des ersten Ausführungsbeispiels der Laservorrichtung.

Figur 1D zeigt eine schematische Aufsicht auf eine zweite nicht erfindungsgemäße Abwandlung des ersten Ausführungsbeispiels der Laservorrichtung.

Figur 2A zeigt eine schematische Aufsicht auf ein zweites nicht erfindungsgemäßes Ausführungsbeispiel einer Laservorrichtung, das das Verständnis der Erfindung erleichtert.

Figur 2B zeigt eine schematische Schnittdarstellung des zweiten Ausführungsbeispiels der Laservorrichtung.

Figur 2C zeigt eine Detailansicht aus Figur 2B.

Figur 3A zeigt eine schematische Aufsicht auf ein drittes Ausführungsbeispiel einer Laservorrichtung gemäß der Erfindung.

Figur 3B zeigt eine schematische Schnittdarstellung des dritten Ausführungsbeispiels der Laservorrichtung.

Figuren 3C und 3D zeigen Detailansichten aus Figur 3A gemäß zweier verschiedener Abwandlungen des dritten Ausführungsbeispiels der Laseranordnung.

Figur 4A zeigt eine schematische Aufsicht auf ein viertes Ausführungsbeispiel der Laservorrichtung gemäß der Erfindung

Figur 4B zeigt eine schematische Schnittdarstellung des vierten Ausführungsbeispiels der Laservorrichtung.

Figur 5A zeigt eine schematische Aufsicht auf ein fünftes Ausführungsbeispiel der Laservorrichtung gemäß der Erfindung.

Figur 5B zeigt eine schematische Schnittdarstellung des fünften Ausführungsbeispiels der Laservorrichtung.

Figur 6 zeigt eine schematische perspektivische Darstellung eines sechsten Ausführungsbeispiels der Laservorrichtung gemäß der Erfindung.

Figur 7 zeigt eine schematische Schnittdarstellung eines siebten Ausführungsbeispiels der Laservorrichtung gemäß der Erfindung.

Figur 8A zeigt eine schematische Schnittdarstellung eines achten Ausführungsbeispiels der Laservorrichtung gemäß der Erfindung.

Figur 8B zeigt eine schematische Draufsicht auf das achte Ausführungsbeispiel der Laservorrichtung.

Figur 8C zeigt eine schematische Schnittdarstellung eines ersten Ausführungsbeispiels einer Kristallanordnung für das achte Ausführungsbeispiel der Laservorrichtung.

Figur 8D zeigt eine schematische Schnittdarstellung eines zweiten Ausführungsbeispiels einer Kristallanordnung für das achte Ausführungsbeispiel der Laservorrichtung.

Figur 8E zeigt eine schematische Draufsicht auf die Kristallanordnung gemäß dem zweiten Ausführungsbeispiel der Kristallanordnung für das achte Aubführungsbeispiel der Laservorrichtung.

Figur 9A zeigt eine schematische Schnittdarstellung eines neunten Ausführungsbeispiels der Laservorrichtung gemäß der Erfindung.

Figur 9B zeigt eine schematische Draufsicht auf das neunte Ausführungsbeispiel der Laservorrichtung.

Figur 10A zeigt eine schematische Schnittdarstellung der Laservorrichtung gemäß einem zehnten Ausführungsbeispiel gemäß der Erfindung .

Figur 10B zeigt eine schematische Draufsicht auf die Laservorrichtung gemäß dem zehnten Ausführungsbeispiel.

Figur 10C zeigt eine schematische Schnittdarstellung der Laservorrichtung gemäß dem zehnten Ausführungsbeispiel.

Figur 10D zeigt eine schematische Schnittdarstellung einer Abwandlung des zehnten Ausführungsbeispiels der Laservorrichtung.

Figur 11A zeigt eine schematische Schnittdarstellung eines elften Ausführungsbeispiels der Laservorrichtung gemäß der Erfindung.

Figur 11B zeigt eine schematische Draufsicht auf das elfte Ausführungsbeispiel der Laservorrichtung.

Figur 11C zeigt eine schematische Schnittdarstellung des elften Ausführungsbeispiels der Laservorrichtung.

Figur 11D zeigt eine schematische Schnittdarstellung einer Abwandlung des elften Ausführungsbeispiels der Laservorrichtung.

Figur 12A zeigt eine schematische Draufsicht auf die Kristallanordnung, wie sie bei einer Laservorrichtung gemäß einem der oben beschriebenen Ausführungsbeispiele Verwendung finden kann.

Die Figuren 12B, 12C und 12D zeigen unterschiedliche Möglichkeiten der Verbindung einer Leiterplatte oder eines Wärmeleitelements mit einer Kristallanordnung.

Figur 13 zeigt eine schematische Perspektivdarstellung eines weiteren Ausführungsbeispiels einer hier beschriebenen Laservorrichtung gemäß der Erfindung.

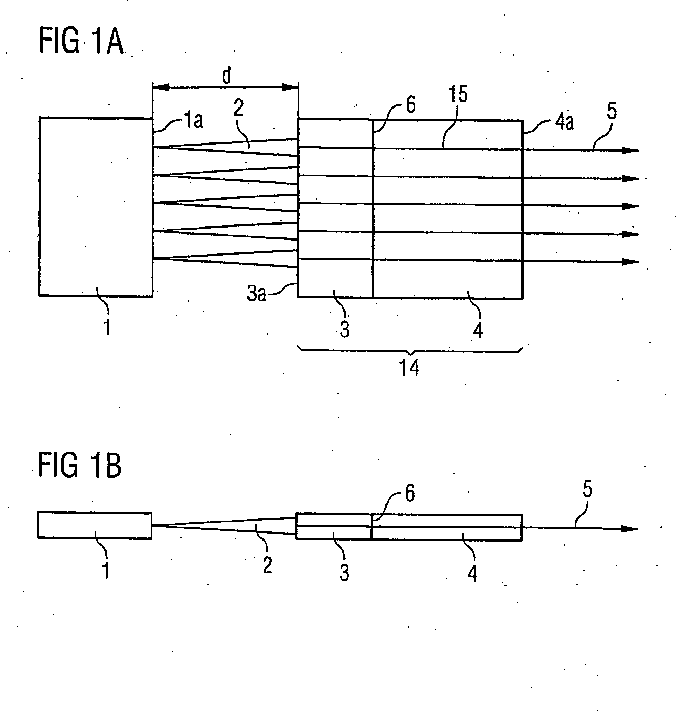

Figur 1A zeigt eine schematische Aufsicht auf ein erstes nicht erfindungsgemäßes Ausführungsbeispiel der hier beschriebenen Laservorrichtung. Figur 1B zeigt die dazugehörige schematische Schnittdarstellung in der Seitenansicht.

Die Laservorrichtung weist eine Pumpquelle 1 auf. Die Pumpquelle 1 ist beispielsweise durch eine Reihenanordnung von drei Breitstreifendiodenlasern (Diodenlaserbarren) gegeben. Die Diodenlaser sind geeignet elektromagnetische Strahlung in einem Wellenbereich zu emittieren, der im Gain-Kristall 3 stark absorbiert werden kann. Im vorliegenden Ausführungsbeispiel emittiert die Pumpquelle eine Vielzahl parallel zueinander verlaufender Laserstrahlen 2 mit einer Wellenlänge von beispielsweise 808 Nanometer. Der Abstand der Pumpstrahlen 2 beträgt bevorzugt zwischen 400 $\mu$m und 500 $\mu$m. Die Emitterbreite, das heißt, die Ausdehnung in lateraler Richtung des Strahls 2 beträgt beim Austritt aus der Pumpquelle bevorzugt maximal 150 $\mu$m.

Wenn, wie es im ersten Ausführungsbeispiel der Fall ist, zwischen Pumpquelle 1 und Gain-Kristall 3 kein weiteres optisches Element angeordnet ist, beträgt die Emitterbreite bevorzugt maximal 100 μm, besonders bevorzugt zwischen 30 und 50 μm.

Der Abstand zwischen Pumpquelle und Gain-Kristall beträgt in diesem Fall bevorzugt maximal 100 μm, besonders bevorzugt maximal 50 μm.

Der Laser oder Gain-Kristall 3 ist zum Beispiel durch einen Nd:YVO$_4$-Kristall oder einen Nd:YAG-Kristall gebildet. Der Gain-Kristall 3 ist geeignet, elektromagnetische Strahlung im nahen Infrarot beispielsweise bei einer Wellenlänge von 1064 Nanometer zu erzeugen.

Im Ausführungsbeispiel der Figuren 1A und 1B sind der Gain-Kristall 3 und der Frequenzkonversionskristall 4 zu einem Kristallverbund verbunden. Das bedeutet, der Gain-Kristall 3 ist mit seiner der Strahlungseintrittsfläche 3a abgewandten Fläche mit einem Frequenzkonversionskristall 4 mechanisch fest verbunden. Beispielsweise sind der Gain-Kristall 3 und der Frequenzkonversionskristall 4 an der Schnittfläche 6 durch Kleben oder Bonden fest miteinander verbunden.

Der Frequenzkonversionskristall 4 ist im gezeigten Ausführungsbeispiel durch einen KTP-Kristall gegeben, der geeignet ist, die vom Laserkristall 3 erzeugte elektromagnetische Strahlung Frequenz zu konvertieren, bevorzugt die Frequenz dieser Strahlung zu verdoppeln.

Gain-Kristall 3 und Frequenzkonversionskristall 4 bilden zusammen die Kristallanordnung 14. Die Kristallanordnung 14 bildet für die im Laserkristall 3 erzeugte elektromagnetische Strahlung der Grundwellenlänge einen Laserresonator.

Dazu ist die Strahlungseintrittsfläche 3a mit einer ersten Beschichtung versehen. Die erste Beschichtung ist hoch transmittierend für die Pumpstrahlung 2. Die Transmittivität ist bevorzugt größer gleich 95 Prozent für eine Strahlung mit einer Wellenlänge von 808 Nanometer.

Weiter ist die erste Beschichtung hoch reflektierend für die im Gain-Kristall 3 erzeugte elektromagnetische Strahlung der Grundwellenlänge. Zum Beispiel beträgt die Reflektivität größer gleich 99,5 Prozent für eine Wellenlänge von 1064 Nanometer.

Für die im Frequenzkonversionskristall frequenzkonvertierte Strahlung ist die erste Beschichtung bevorzugt hoch reflektierend mit einer Reflektivität von größer gleich 95 Prozent bei einer Wellenlänge von 532 Nanometer.

Die Strahlungsaustrittsfläche 4a ist bevorzugt mit einer zweiten Beschichtung versehen. Die zweite Beschichtung ist bevorzugt für die im Gain-Kristall erzeugte Strahlung der Grundwellenlänge hoch reflektierend. Die Reflektivität beträgt bevorzugt größer gleich 99,5 Prozent bei einer Wellenlänge von 1064 Nanometer.

Weiter ist die zweite Beschichtung bevorzugt hoch transmittierend für die im Frequenzkonversionskristall frequenzverdoppelte Strahlung. Die Transmittivität beträgt beispielsweise größer gleich 95 Prozent bei einer Wellenlänge von 532 Nanometer.

Die Strahlungseintrittsfläche 3a und die Strahlungsaustrittsfläche 4a bilden einen optischen Plan-Plan-Resonator. Es entsteht daher im Gain-Kristall 3 Laserstrahlung 15, die in der Kristallanordnung 14 zirkuliert. Ein Teil dieser umlaufenden Strahlung wird in Strahlung beispielsweise doppelter Frequenz im Frequenzkonversionskristall 4 konvertiert. Dieses zum Beispiel grüne Laserlicht 5 verlässt die Kristallanordnung durch die Strahlungsaustrittsfläche 4a.

Die Zahl der Laserstrahlen 15 in der Kristallanordnung 14 entspricht bevorzugt der Zahl der Pumpstrahlen 2. Vorzugsweise wird jeder Laserstrahl 15 in der Kristallanordnung 14 durch genau einen Pumpstrahl 2 optisch gepumpt. Die Zahl der frequenzkonvertierten Laserstrahlen 5, die die Kristallanordnung durch die Strahlungsaustrittsfläche 4a verlassen entspricht dann der Zahl der in der Kristallanordnung erzeugten Laserstrahlen 15 und damit der Zahl der Pumpstrahlen 2.

Der durch die beschichteten Seitenflächen 3a und 4a gebildete Plan-Plan-Resonator ist dabei durch einen thermischen Linseneffekt für jeden Laserstrahl 15 in der Kristallanordnung 14 stabilisiert. Das heißt aufgrund der thermischen Einwirkung eines Laserstrahls 15 in der Kristallanordnung findet radial um den Laserstrahl 15 eine thermisch induzierte Brechungsindexänderung statt. Die radiale Brechungsindexänderung bildet eine Gradientenlinse, die den Resonator stabilisiert und den Strahldurchmesser im Resonator auf ein Maß verringert, das dem Durchmesser eines Pumpstrahls 2 im Gain-Kristall 3 ähnelt. Das heißt, Pumpstrahlen 2 und Laserstrahl 15, weisen bevorzugt ungefähr die gleiche laterale Ausdehnung auf. Dies gilt für alle Strahlen 15 in der Kristallanordnung. Leistung, Abstand und Durchmesser der Pumpstrahlen 2 muss dabei so gewählt werden, dass sich die einzelnen Strahlen 15 in der Kristallanordnung nicht zu stark thermisch gegenseitig beeinflussen.

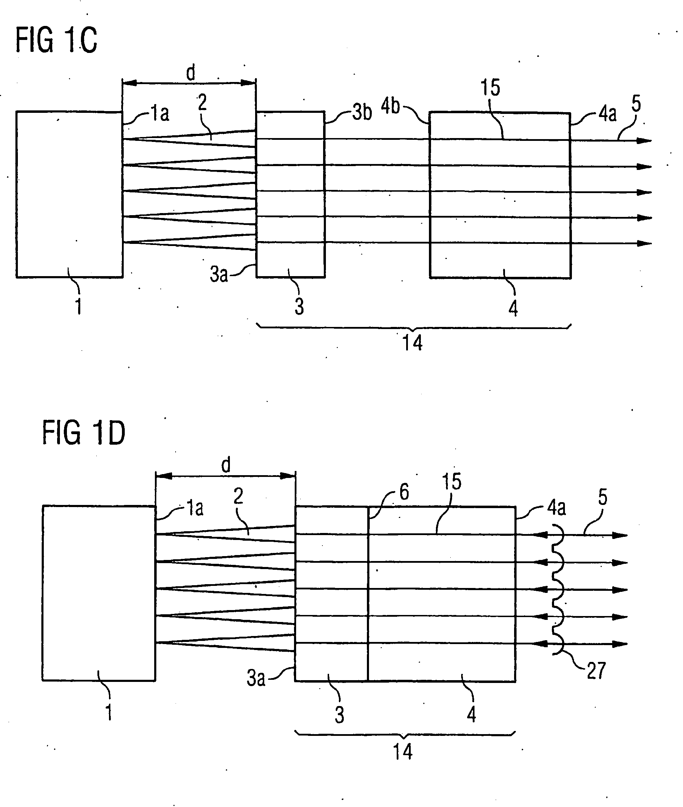

Figur 1C zeigt eine schematische Aufsicht auf eine erste nicht erfindungsgemäße Abwandlung des ersten Ausführungsbeispiels der Laservorrichtung.

Hierbei sind Gain-Kristall 3 und Frequenzkonversionskristall 4 nicht miteinander verbunden, sondern sind beabstandet zueinander angeordnet. Die Strahlungsaustrittsfläche 3b des Gain-Kristalls 3 und die Strahlungseintrittsfläche 4b des Frequenzkonversionskristalls 4 sind dabei bevorzugt hoch transmittierend für die im Gain-Kristall 3 erzeugte elektromagnetische Strahlung der Grundwellenlänge und die im Frequenzkonversionskristall frequenzkonvertierte Strahlung beschichtet. Zum Beispiel beträgt die Transmittivität für beide Wellenlängen bevorzugt größer gleich 99,8 Prozent. Das heißt, die Flächen sind hochwertig entspiegelt für Strahlung beider Wellenlängen.

Die gezeigte beabstandete Anordnung von Gain- 3 und Frequenzkonversionskristall 4 ist dabei auch in den folgenden Ausführungsbeispielen möglich.

Figur 1D zeigt eine schematische Aufsicht auf eine zweite nicht erfindungsgemäße Abwandlung des ersten Ausführungsbeispiels der Laservorrichtung.

Dabei ist der Strahlungsaustrittsfläche 4a des Frequenzkonversionskristalls eine Reihenanordnung von Konkavspiegeln 27 nachgeordnet. Bevorzugt ist jedem Laserstrahl 15 dabei genau ein Konkavspiegel 27 zugeordnet. Der Konkavspiegel 27 ist bevorzugt für die im Gain-Kristall 3 erzeugte elektromagnetische Strahlung der Grundwellenlänge hoch reflektierend und die im Frequenzkonversionskristall frequenzkonvertierte Strahlung hoch transmittierend. Die Strahlungsaustrittsfläche 4a des Frequenzkonversionskristalls 4 ist dabei bevorzugt hoch transmittierend für die im Gain-Kristall 3 erzeugte elektromagnetische Strahlung der Grundwellenlänge und die im Frequenzkonversionskristall frequenzkonvertierte Strahlung beschichtet. Zum Beispiel beträgt die Transmittivität für beide Wellenlängen bevorzugt größer gleich 99,8 Prozent. Das heißt, die Fläche ist hochwertig entspiegelt für Strahlung beider Wellenlängen.

Die Konkavspiegel 27 und die Strahlungseintrittsfläche 3a des Gain-Kristalls 3 bilden für einen Laserstahl 15 jeweils einen Resonator. Bevorzugt sind die Konkavspiegel als ein zusammenhängender Streifen ausgeführt. Beispielsweise kann der Streifen integral und/oder einstückig ausgeführt sein. Die in Figur 1C gezeigte beabstandete Anordnung von Gain- 3 und Frequenzkonversionskristall 4 ist in diesem Ausführungsbeispiel besonders bevorzugt. Die Anordnung von Konkavspiegeln 27 ist auch in den folgenden Ausführungsbeispielen möglich.

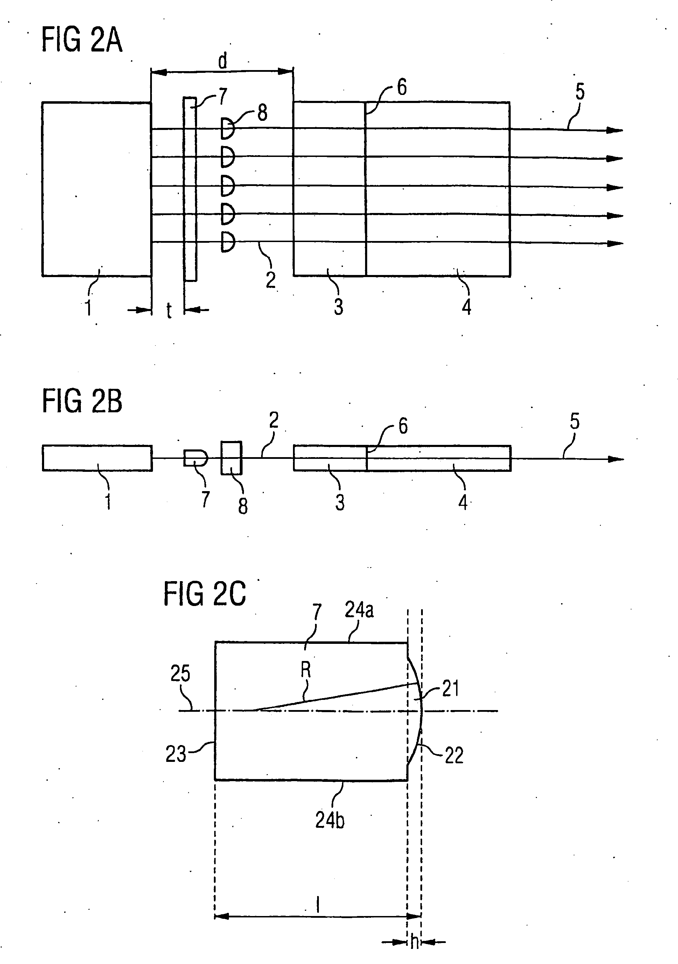

Die Figur 2A zeigt eine schematische Aufsicht auf ein zweites nicht erfindungsgemäßes Ausführungsbeispiel der hier beschriebenen Laservorrichtung. Figur 2B zeigt die dazugehörige Schnittdarstellung in der Seitenansicht. Im Gegensatz zum Ausführungsbeispiel der Figur 1 sind im Strahlengang der Pumpstrahlquelle 1 optische Elemente 7, 8 angeordnet, die geeignet sind, die Divergenz der Pumpstrahlen 2 zu verringern und/oder den Emitter verkleinert abzubilden. Die optischen Elemente 7,8 sind bevorzugt geeignet, einen Pumpstrahl 2 vorgebbarer Größe im Gain-Kristall 3 zu erzeugen. Der Abstand d zwischen Pumpquelle 1 und Kristallanordnung 14 kann dann entsprechend größer gewählt sein.

Zur Kollimation der Pumpstrahlung in der Fast-Axis-Richtung - vertikal zur durch die Pumpstrahlen 2 aufgespannten Ebene - kann beispielsweise eine gemeinsame plan-konvexe Zylinderlinse für alle Pumpstrahlen 2 Verwendung finden.

Figur 2C zeigt eine schematische Schnittdarstellung der Zylinderlinse 7 in der Seitenansicht.

Die Linse 7 weist beispielsweise eine Strahlungseintrittsfläche 23 auf. Der Strahlungseintrittsfläche 23 gegenüberliegend ist ein konvex gewölbter Bereich 21 angeordnet, der eine Höhe h aufweist. Der konvex gewölbte Bereich kann sich über die gesamte der Strahlungseintrittsfläche 23 gegenüberliegenden Fläche der Linse erstrecken. Es ist aber auch möglich, dass der konvex gewölbte Bereich, wie in Figur 2C dargestellt, lediglich einen Teil dieser Fläche einnimmt.

Der konvex gewölbte Bereich 21 ist von der asphärischen Fläche 22 abgeschlossen, die die Strahlungsaustrittsfläche der Linse bildet. Der Abstand zwischen Strahlungseintrittsfläche 23 und dem Scheitelpunkt der asphärisch, konvex gewölbten Fläche 22 wird als Dicke 1 der Linse bezeichnet. Zum Beispiel ist der Scheitelpunk der gewölbten Fläche dabei auf der optischen Achse 25 der Linse angeordnet.

Strahlungseintrittsfläche 23 und die Fläche der Linse 7, die den konvex gewölbten Bereich 21 umfasst, sind durch ebene Seitenflächen 24a und 24b miteinander verbunden. Eine dieser Seitenflächen, beispielsweise die Seitenfläche 24b, dient als Montagefläche der Linse, mit der die Linse beispielsweise auf einem Träger befestigt werden kann. Die gegenüberliegende Seitenfläche 24a kann bei der Montage der Linse 7 beispielsweise als Ansaugfläche für eine Saugpinzette zur Montage der Linse 7 dienen.

Die Linse 7 enthält beispielsweise GaP oder ein auf GaP basierendes Halbleitermaterial wie beispielsweise InGaP oder InGaAlP. Es ist aber auch möglich, dass die Linse 7 ein hochbrechendes Glas enthält. Die Linse kann entweder eines dieser Materialien enthalten oder aus einem dieser Materialien bestehen. Beispielsweise GaP weist für elektromagnetische Strahlung im Wellenlängenbereich von ca. 800 bis 950 nm einen Brechungsindex von ca. 3,10 bis 3,14 auf.

Beispielsweise auf die Strahlungseintrittsfläche 23 und die asphärische Fläche 22 kann eine Anti-Reflexionsbeschichtung aufgebracht sein (nicht dargestellt). Die Anti-Reflexionsbeschichtung kann z. B. der Wellenlänge der elektromagnetischen Strahlung, für die die Linse vorgesehen ist, angepasst sein. Beispielsweise ist die Anti-Reflexionsbeschichtung als einzelne Schicht ausgeführt, die z. B. $SiN_xO_y$ enthalten kann. Es ist auch möglich, dass die Anti-Reflexionsbeschichtung als Abfolge von mehreren Schichten ausgebildet ist. Beispielsweise kann die Anti-Reflexionsbeschichtung eine Schicht umfassen, die Tantalpentoxid enthält, und eine weitere Schicht, die Aluminiumoxid ($Al_2O_3$) enthält. Bevorzugt wird die Anti-Reflexionsbeschichtung noch im Waferverbund auf die Oberfläche der Linsen beispielsweise aufgedampft.

Die Herstellung der Linse 7 kann beispielsweise mittels Ätzen der Linsenstruktur im Waferverbund und anschließendes Vereinzeln, beispielsweise mittels Sägen, erfolgen.

Zur Erzeugung der asphärischen Fläche 22 wird beispielsweise zunächst eine Fotolackschicht auf einem Linsensubstrat erzeugt. Nachfolgend wird die Fotolackschicht zu einer Lacklinse strukturiert. Die Struktur der Fotolacklinse kann dann mittels eines anisotropen Ätzverfahrens, wie beispielsweise reaktives Ionenätzen, zumindest teilweise auf das darunterliegende Linsensubstrat übertragen werden.

Außerdem eignen sich auch Ätzverfahren wie anodisch gekoppeltes Plasmaätzen im Parallelplattenreaktor, triodenreaktives Ionenätzen, induktiv gekoppeltes Plasmaätzen oder ähnliche Verfahren. Bevorzugt kommen beim verwendeten Herstellungsverfahren mehrere Gaskomponenten mit unterschiedlicher Selektivität gegenüber der Fotolackschicht und dem Linsensubstrat zum Einsatz. Die Selektivität bezeichnet dabei das Verhältnis der Ätzrate des Linsensubstrats und der Ätzrate des Fotolacks. Bei einer Selektivität von 1 etwa wird die Form der Lacklinse im Wesentlichen unverändert auf das Linsensubstrat übertragen. Eine Selektivität von > 1 führt dagegen zu einer Überhöhung der geätzten Halbleiterlinse verglichen mit der Fotolacklinse. Die Selektivität des Ätzverfahrens bestimmt also zusammen mit der Ausgangsform der Lacklinse die Form der erzeugten Linse 7.

Die Form der asphärischen Fläche 22 der Linse 7 ist dabei durch die Rotationsasphäre einer achsensymmetrischen Kurve y beschrieben, mit

$$y = \frac{x^2}{R(1 + \sqrt{1 - \frac{(1+c)x^2}{R^2}})}.$$

Je nach Wahl der Linsenparameter wie Krümmungsradius R, Asphärenfaktor c, der Linsendicke 1 und der Höhe h des konvex gekrümmten Bereichs 21 ist es möglich, eine plankonvexe asphärische Linse 7 mit gewünschter Kollimation und gewünschter numerischer Apertur herzustellen.

Die Eigenschaften der Linse 7 sind beispielsweise den Einsatzerfordernissen an die Linse 7 in der Laservorrichtung angepasst.

Die Strahlungsauskoppelfläche 1a der Pumpquelle 1 befindet sich dabei in einem Arbeitsabstand t von der Strahlungseintrittsfläche 23 der Linse 7. Die Linse 7 ist geeignet, die Divergenz der vom Halbleiterchip erzeugten elektromagnetischen Strahlung zu verringern. Dazu wird die Pumpstrahlung 2 bereits bei ihrem Eintritt an der Strahlungseintrittsfläche 23 zur optischen Achse 25 der Linse 7 hin gebrochen. Bei Strahlungsaustritt durch die asphärische Fläche 22 findet eine weitere Brechung zur optischen Achse hin statt. Die numerische Apertur des Halbleiterchips beträgt dabei beispielsweise zwischen 0,75 und 0,85, bevorzugt 0,8.

Gemäß eines Ausführungsbeispiels der Laseranordnung wird bei einer Linsendicke 1 von ca. 450 μm ein Arbeitsabstand von t= 75 μm zwischen Pumpquelle und Linse gewählt. Eine numerische Apertur von ca. 0.82 kann beispielsweise durch eine Wahl des Krümmungsradius von R = -454 μm und einen Asphärenfaktor von c = -2,539 erreicht sein. Die Höhe h des gewölbten Bereichs der Linse 7 beträgt dabei 50 μm.

Zur Kollimation und/oder Fokussierung der Pumpstrahlung in der Slow-Axis-Richtung - in der Ebene der Pumpstrahlen 2 - kann für jeden Strahl 2 jeweils eine plan-konvexe Zylinderlinse 8 Verwendung finden. Die Linsen 8 können beispielsweise aus Glas gebildet sein.

Bevorzugt weisen sie plane Strahlungseintrittsflächen und sphärisch konvex gewölbte Strahlungsaustrittsflächen auf. Die Strahlungseintrittsflächen und/oder Strahlungsaustrittsflächen können mit einer wie oben beschriebenen Antireflexionsbeschichtung versehen sein.

Es ist aber auch möglich, dass die Slow-Axis-Linsen ähnlich wie die Fast-Axis-Linsen aus einem GaP-basierenden Halbleitermaterial gebildet sind oder ein solches enthalten. Die Strahlungsaustrittsflächen der Slow-Axis-Linsen können dann sphärisch oder asphärisch konvex gewölbt sein. Prinzipiell kann die Slow-Axis-Linse als eine um 90 Grad horizontal gedrehte Fast-Axis-Linse ausgeführt sein, wie sie oben beschrieben ist.

Weiter ist es möglich, dass die Linse 7 und die Linsen 8 in einem gemeinsamen Linsenstab (nicht dargestellt) integriert sind. Das heißt, die Strahlungsaustrittsfläche der Linse 7 ist mechanisch fest mit den Strahlungseintrittsflächen der Linsen 8 verbunden. Auf diese Weise kann eine Antireflexionsbeschichtung an der Grenzfläche zwischen Linse 7 und Linse 8 entfallen.

Bevorzugt fokussiert die Pumpoptik 7, 8 jeden Einzelemitter des Pumplaserbarrens auf einen direkt zugeordneten zu pumpenden Bereich des Gain-Kristalls 3. Es ist aber auch möglich, dass die Pumpoptik geeignet ist, das Licht der Pumpquelle zu mischen und anschließend wieder eine Reihe diskreter Pumpbereiche im Gain-Kristall 3 zu erzeugen. Beispielsweise kann die Pumpquelle 1 dann genau einen Laserstrahl erzeugen, der von der Pumpoptik 7, 8 in mehrere Pumpstrahlen 2 aufgeteilt wird.

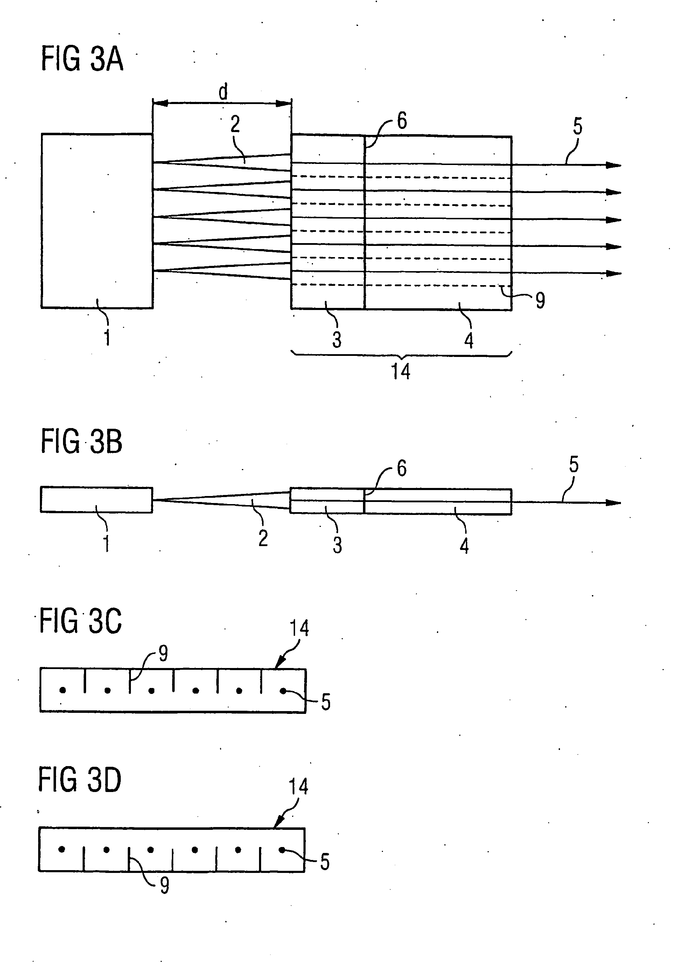

Figur 3A zeigt eine schematische Aufsicht auf ein drittes Ausführungsbeispiel der hier beschriebenen Laservorrichtung gemäß der Erfindung

Figur 3B zeigt die dazugehörige Schnittdarstellung in der Seitenansicht.

Im Gegensatz zum Ausführungsbeispiel der Figur 1A und 1B sind hier Sägegräben 9 in der Kristallanordnung 14 angeordnet, die sich längs der Laserstrahlen 15 erstrecken. Die Sägegräben dienen zur thermischen Entkopplung der einzelnen Strahlen 15 untereinander. Die thermischen Linsen der einzelnen Strahlen 15 sind dadurch besser voneinander entkoppelt. Je breiter und tiefer die Sägegräben 9 dabei gewählt sind, desto besser ist die thermische Entkopplung der einzelnen durch die Sägegräben 9 definierten Bereiche der Laservorrichtung. Bevorzugt sind die Sägegräben 9 in etwa 150 μm breit. Dabei verlaufen die Sägegräben bevorzugt parallel zu den Laserstrahlen 15 in der Kristallanordnung. Wichtig ist in diesem Ausführungsbeispiel, dass die Kristallanordnung 14 als zusammenhängendes Objekt erhalten bleiben kann. Das heißt, die Sägegräben 9 durchtrennen keinen Kristall der Anordnung vollständig. Die Kristallanordnung 14 kann mit den angesägten Flächen nach oben (vergleiche die Frontalansicht der Figur 3C) beziehungsweise nach unten (vergleiche Figur 3D) montiert werden.

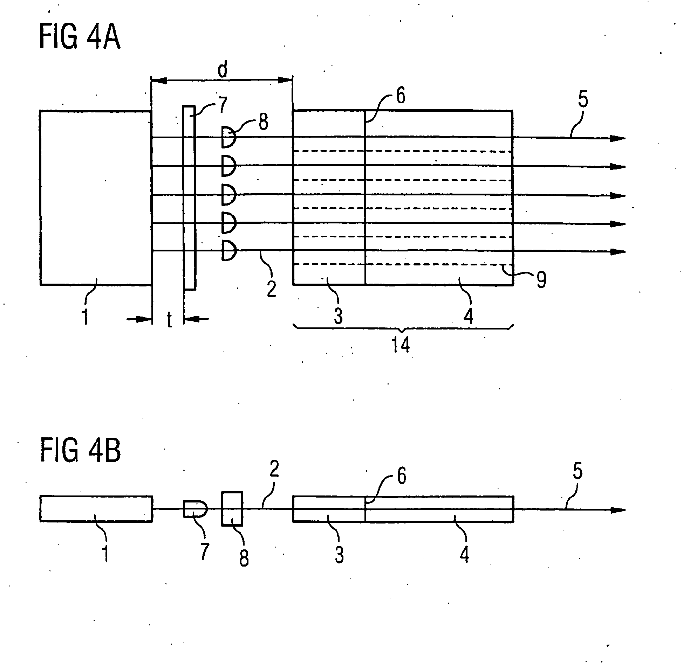

Figur 4A zeigt eine schematische Aufsicht auf ein viertes Ausführungsbeispiel der Laservorrichtung gemäß der Erfindung. Figur 4b zeigt die dazugehörige Schnittdarstellung in der Seitenansicht.

Im Gegensatz zum Ausführungsbeispiel der Figuren 2A und 2B sind hier die Sägegräben 9 des Ausführungsbeispiels der Figuren 3A und 3B zwischen den einzelnen Laserstrahlen gemäß der Erfindung 5 angeordnet.

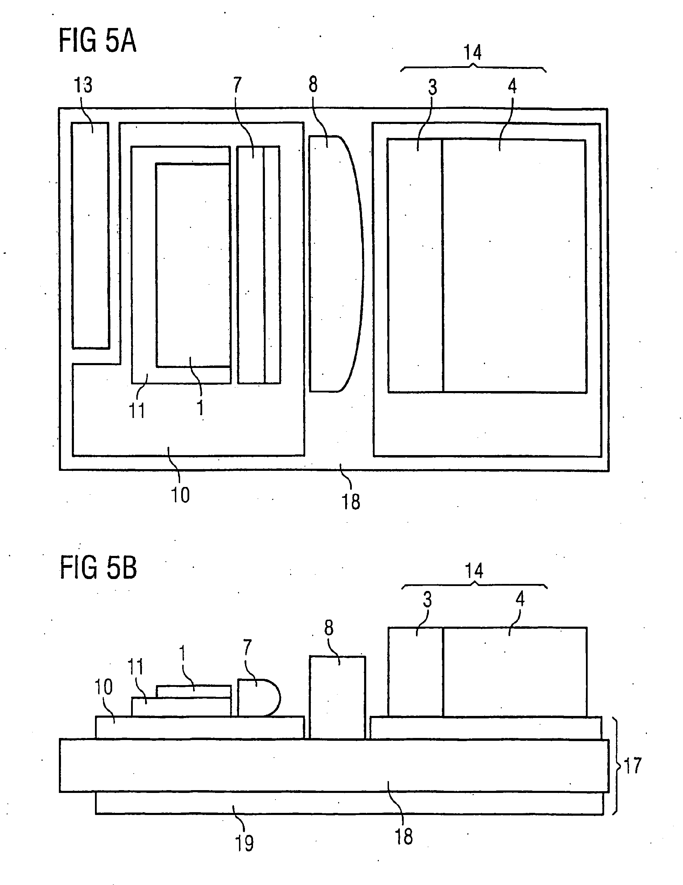

Figur 5A zeigt ein fünftes Ausführungsbeispiel der hier beschriebenen Laservorrichtung gemäß der Erfindung in einer schematischen Aufsicht.

Figur 5B zeigt die zugehörige Schnittdarstellung in der Seitenansicht.

Die Pumpstrahlquelle 1 ist auf einer Wärmesenke 11 beispielsweise mittels eines Hartlotes wie AuSn befestigt. Mittels des elektrischen Anschlussbereichs 13 kann die Pumpquelle 1 elektrisch kontaktiert werden. Die Wärmesenke 11 ist zum Beispiel ebenfalls mittels eines Hartlotes auf eine Leiterplatte 17 montiert. Die Leiterplatte 17 enthält eine Keramiklage 8, eine obere Kupferlage 10 und eine untere Kupferlage 19. Die Leiterplatte 17 bildet damit eine DBC (Direct Bonded Copper)-Leiterplatte. Auch die Kristallanordnung 14 kann auf eine Wärmesenke 10, die beispielsweise Kupfer oder ein anderes gut Wärme leitendes Material enthält, befestigt sein. Die Pumpoptik 7, 8 kann sowohl auf der Kupferlage 10, als auch auf der Keramiklage 18 befestigt sein.

Weiter ist es möglich, dass die Leiterplatte 17 aus Kupfer oder Silizium besteht oder Kupfer oder Silizium enthält. Bevorzugt ist die Kristallanordnung 14 mittels zumindest eines der folgenden Befestigungsmittel auf dem Träger 17 befestigt: Klebstoff, Weichlot, Hartlot.

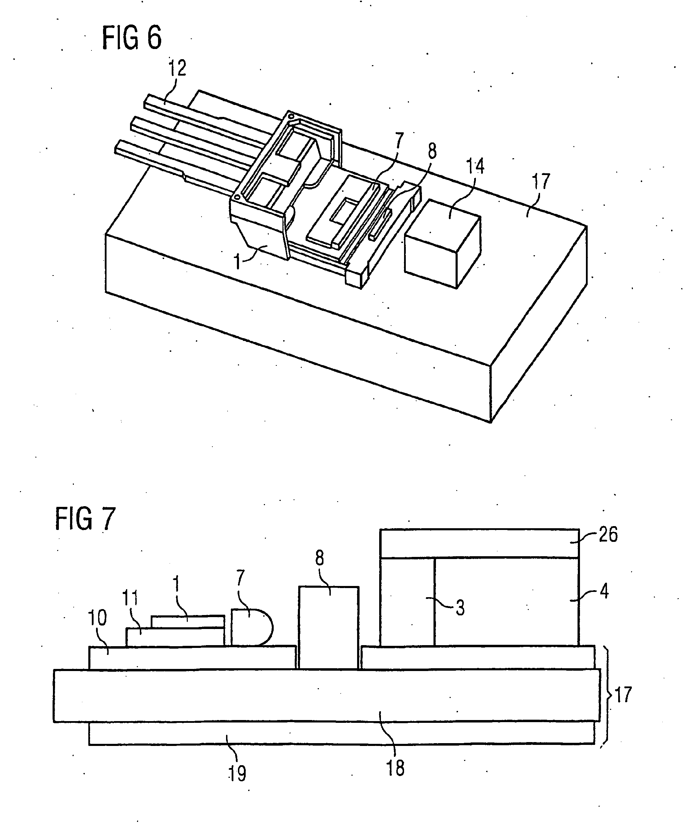

Wie der perspektivischen Ansicht der Figur 6 zu entnehmen ist, kann die Pumpquelle 1 beispielsweise mittels Anschlusspins 12 etwa über eine Steckverbindung elektrisch kontaktiert sein.

Bevorzugt beträgt die Länge des Gain-Kristalls 3 in Richtung der Pumpstrahlen 2 zwischen 0,5 und 2mm. Die Länge des Frequenzkonversionskristalls beträgt bevorzugt zwischen 2 und 5mm. Die Gesamtlänge der Laservorrichtung beträgt bevorzugt zwischen 5 und 20mm.

Die Figur 7 zeigt eine schematische Schnittansicht eines siebten Ausführungsbeispiels der Laservorrichtung gemäß der Erfindung. Dabei ist auf der Kristallanordnung 14 ein Wärmeleitelement 26 angeordnet. Das Wärmeleitelement 26 enthält zumindest eines der folgenden Materialien oder ist aus diesen gebildet: Kupfer, Kupferverbundwerkstoff (DBC), Silizium. Das Wärmeleitelement 26 dient zur verbesserten Wärmeabfuhr der im Betrieb der Vorrichtung erzeugten Wärme. Beispielsweise kann es mit einer Wärmesenke thermisch gekoppelt sein.

Bevorzugt ist das Wärmeleitelement 26 mittels einer der folgenden Befestigungsmittel auf der Kristallanordnung 14 befestigt: Klebstoff, Weichlot, Hartlot. Bei dem Klebstoff handelt es sich bevorzugt um einen besonders temperaturbeständigen Klebstoff.

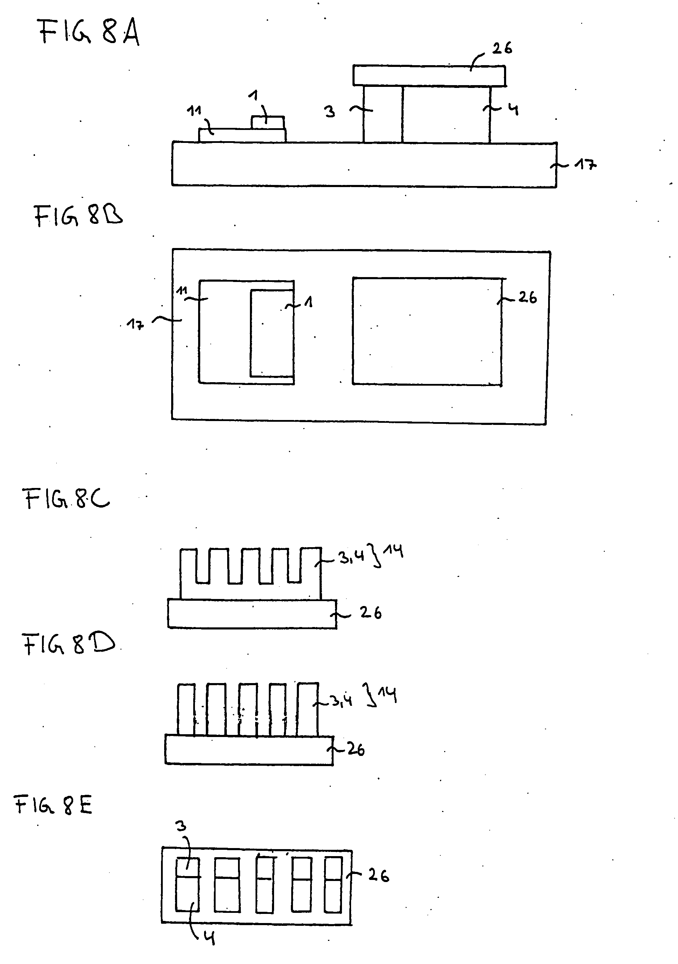

Figur 8A zeigt eine schematische Schnittdarstellung eines achten Ausführungsbeispiels der Laservorrichtung gemäß der Erfindung. Figur 8B zeigt schematisch die zugehörige Draufsicht. Analog beispielsweise dem Ausführungsbeispiel der Laservorrichtung, das in Verbindung mit Figur 7 beschrieben ist, umfasst die Laservorrichtung eine Pumpquelle 1, die auf einer Wärmesenke 11 angeordnet sein kann. Die Pumpquelle 1 ist zusammen mit der Wärmesenke 11 auf eine Leiterplatte 17 montiert und elektrisch angeschlossen. Die Leiterplatte 17 ist beispielsweise durch eine DBC-Leiterplatte gebildet. Ferner ist es möglich, dass die Leiterplatte 17 aus Silizium oder einem anderen gut Wärme leitenden Material gebildet ist, auf das Leiterbahnen zum elektrischen Kontaktieren beispielsweise der Pumpquelle 1 strukturiert sein können.

Die Laservorrichtung umfasst ferner eine Kristallanordnung 14, welche zumindest einen Gain-Kristall 3 und zumindest einen Frequenzkonversionskristall 4 umfasst. Die Kristalle der Kristallanordnung 14 können beispielsweise mittels des Wärmeleitelements 26 miteinander verbunden sein. Das Wärmeleitelement 26 besteht aus oder enthält vorzugsweise Silizium.

Figur 8C zeigt ein erstes Ausführungsbeispiel für eine Kristallanordnung für die in Verbindung mit beispielsweise den Figuren 8A und 8B beschriebene Laservorrichtung. Die Sägegräben 9 der Kristallanordnung 14 erstrecken sich in diesem Ausführungsbeispiel der Laservorrichtung nicht bis zum Wärmeleitelement 26, sodass eine zusammenhängende, einstückig ausgebildete Kristallanordnung 14 auf dem Wärmeleitelement 26 befestigt ist. Das heißt, die Kristallanordnung 14 ist mechanisch mit dem Wärmeleitelement 26 verbunden und thermisch an das Wärmeleitelement 26 angeschlossen.

In der Figur 8D ist ein zweites Ausführungsbeispiel der Kristallanordnung 14 in einer schematischen Schnittdarstellung dargestellt, Figur 8E zeigt die zugehörige schematische Draufsicht. In diesem zweiten Ausführungsbeispiel der Kristallanordnung 14 erstrecken sich die Sägegräben 9 bis zum Wärmeleitelement 26. Die Sägegräben 9 können dabei vor oder nach der Montage der Kristallanordnung 14 auf das Wärmeleitelement 26 erzeugt sein. Das heißt, in diesem Ausführungsbeispiel ist die Kristallanordnung 14 durch eine Vielzahl von Kristallverbünden mit je einem Gain-Kristall 3 und einem Frequenzkonversionskristall 4 gebildet. Die Kristall sind hierbei mittels des Wärmeleitelements 26 mechanisch miteinander verbunden.

Falls die Sägegräben 9 vor der Montage auf das Wärmeleitelement 26 erzeugt werden, ist es möglich, dass die einzelnen Kristallverbünde aus jeweils einem Gain-Kristall 3 und einem Frequenzkonversionskristall 4 einzeln auf das Wärmeleitelement 26 montiert werden. Dafür können Justagemarken auf dem Wärmeleitelement 26 vorgesehen sein, die eine Positionierung der Kristallverbunde auf dem Wärmeleitelement 26 in einem Passiv-Montageverfahren ermöglichen. Das heißt, die Justage und Montage der Kristallverbunde auf dem Wärmeleitelement 26 erfolgt mittels einer Ausrichtung der Kristallverbunde an den Justagemarken.

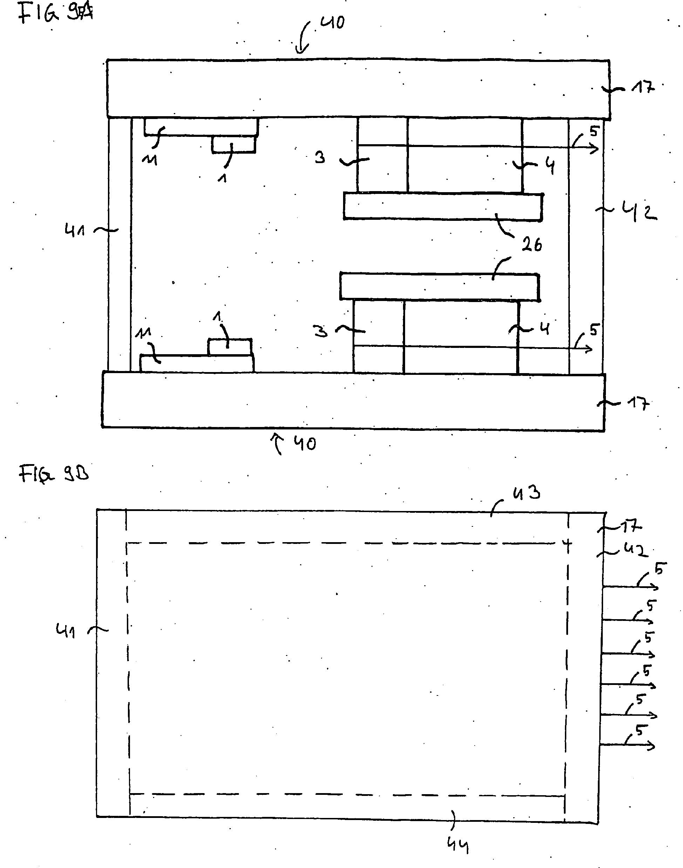

Figur 9A zeigt eine schematische Schnittdarstellung eines neunten erfindungsgemäßen Ausführungsbeispiels der Laservorrichtung. Figur 9B zeigt eine schematische Draufsicht auf das neunte Ausführungsbeispiel der Laservorrichtung.

Im neunten Ausführungsbeispiel der Laservorrichtung sind zwei Einzel-Laservorrichtungen 40, wie sie im Zusammenhang mit einem der vorherigen Ausführungsbeispiele erläutert sind, vertikal übereinander angeordnet. Die Einzel-Laservorrichtungen 40 sind dabei derart angeordnet, dass aktive Komponenten wie beispielsweise die Pumpquellen 1 einander zugewandt sind und die Leiterplatten 17 der Einzel-Laservorrichtungen 40 parallel oder bis auf fertigungsbedingte Schwankungen im Wesentlichen parallel zueinander verlaufen.

Die Einzel-Laservorrichtungen 40 sind beispielsweise durch Abstandhalter 41, 42, 43, 44 voneinander beabstandet angeordnet. Dabei ist es möglich, dass auf die seitlichen Abstandhalter 43, 44 oder den vorderen Abstandhalter 42 und den hinteren Abstandhalter 41 verzichtet wird. Die Abstandhalter 41, 42, 43, 44 verbinden die Einzel-Laservorrichtungen 40 mechanisch miteinander. Sie können beispielsweise aus einem Glas oder einem Halbleitermaterial gebildet sein. Der vordere Abstandhalter 42, durch den frequenzkonvertierte Laserstrahlung 5 die Einzel-Laservorrichtungen 40 verlässt, kann ein optisches Element bilden. Beispielsweise kann der vordere Abstandhalter 42 zur Durchmischung der Laserstrahlung 5 dienen. Auf diese Weise kann aus den Einzellaserstrahlen 5 ein einziger Laserstrahl gebildet werden.

Mit der gezeigten Stapelung von Einzel-Laservorrichtungen 40 ist eine Skalierung der Laserleistung in eine zweite Raumrichtung ermöglicht. Neben der Stapelung von zwei Einzel-Laservorrichtungen 40 ist auch eine Stapelung einer Vielzahl von Einzel-Laservorrichtungen 40 in der dargestellten Weise denkbar.

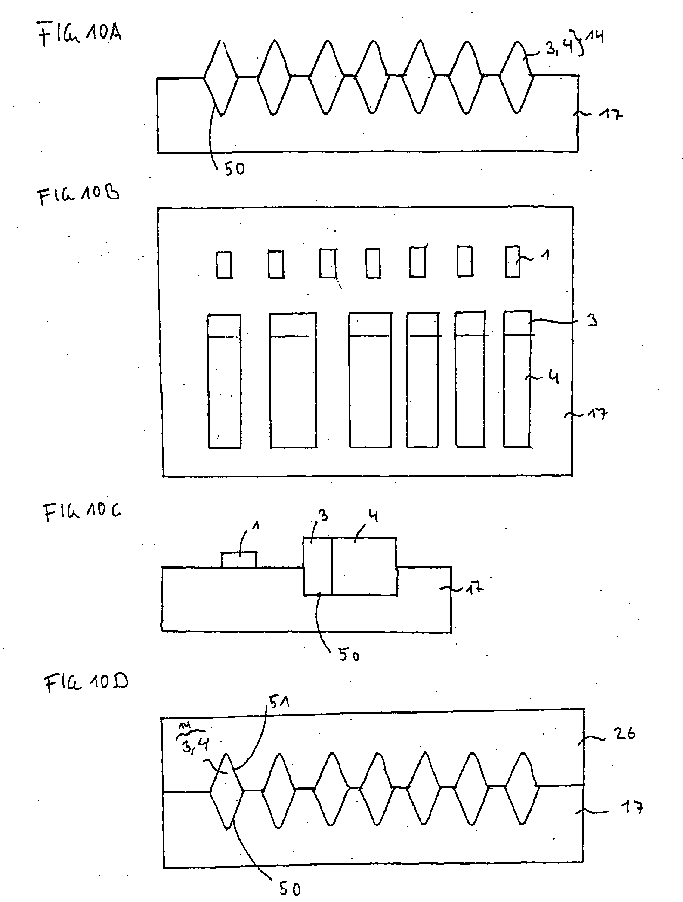

Figur 10A zeigt eine schematische Schnittdarstellung eines zehnten Ausführungsbeispiels der Laservorrichtung. Im zehnten Ausführungsbeispiel sind Kristallverbunde umfassend je einen Gain-Kristall 3 und einen Frequenzkonversionskristall 4 in Ausnehmungen der Leiterplatte 17 eingebracht. Die Leiterplatte 17 kann dabei beispielsweise aus einem Silizium bestehen oder Silizium enthalten. Vorzugsweise ist die Tiefe der Ausnehmungen 50 geringer als die Höhe der Kristalle 3,4 des Kristallverbundes gewählt, sodass die Kristalle 3,4 den Rand der Ausnehmung 50 überragen. Vorzugsweise stehen die Kristalle des Kristallverbunds mit zumindest 40 % ihrer Höhe über den Rand der Ausnehmung 50 über.

Die Form der Ausnehmungen 50 kann im Schnitt beispielsweise U- oder V-förmig gewählt sein. Das heißt, es handelt sich bei der Ausnehmungen 50 dann um U- oder V-förmige Gräben, die in die Leiterplatte 17 strukturiert sind und sich wenigstens über die Länge des Kristallverbundes erstrecken. Beispielsweise sind die Ausnehmungen 50 mittels eines anisotropen Ätzverfahrens in die Leiterplatte 17 strukturiert.

Wie in den Figuren 10B und 10C dargestellt, kann die Pumpquelle 1 direkt auf die Leiterplatte 17 befestigt, z. B. gelötet sein. Alternativ kann die Pumpquelle 1 aber auch, wie in Verbindung mit den vorherigen Ausführungsbeispielen beschrieben, auf eine Wärmesenke 11 montiert sein, die wiederum auf der Leiterplatte 17 befestigt ist.

Gemäß der in Verbindung mit Figur 10D beschriebenen Abwandlung des zehnten Ausführungsbeispiels der Laservorrichtung kann auf die Kristallanordnung 14 ferner ein Wärmeleitelement 26 aufgebracht sein, das beispielsweise aus dem gleichen Material wie die Leiterplatte 17 besteht. Bei dem Wärmeleitelement 26 kann es sich beispielsweise um einen Siliziumwafer oder einen Siliziumstreifen handeln, in den Ausnehmungen 51 strukturiert sind. Das heißt, die Ausnehmungen 51 sind in Form und Größe derart ausgebildet, dass sie die Kristallverbünde möglichst formschlüssig umgreifen. In diesem Ausführungsbeispiel ist die Kristallanordnung 14 - abgesehen von der Strahlungseintrittsfläche 3a und der Strahlungsaustrittsfläche 4a - möglichst vollständig vom Träger 17 und Wärmeleitelement 26 umgeben.

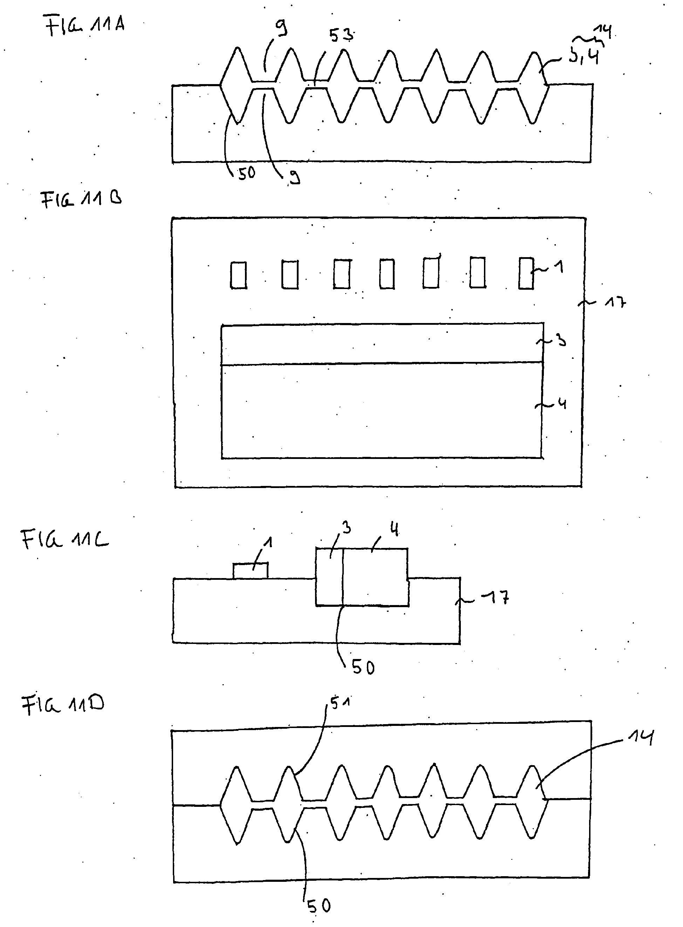

Im Unterschied zum in Verbindung mit den Figuren 10A bis 10D beschriebenen zehnten Ausführungsbeispiel der Laservorrichtung ist im in Verbindung mit den Figuren 11A bis 11D beschriebenen erfindungsgemäßen Ausführungsbeispiel der Laservorrichtung die Kristallanordnung 14 nicht vollständig von Sägegräben 9 durchtrennt, sondern es verbleiben Stege 53. Die Kristallanordnung 14 ist in diesem Ausführungsbeispiel also einstückig ausgebildet.

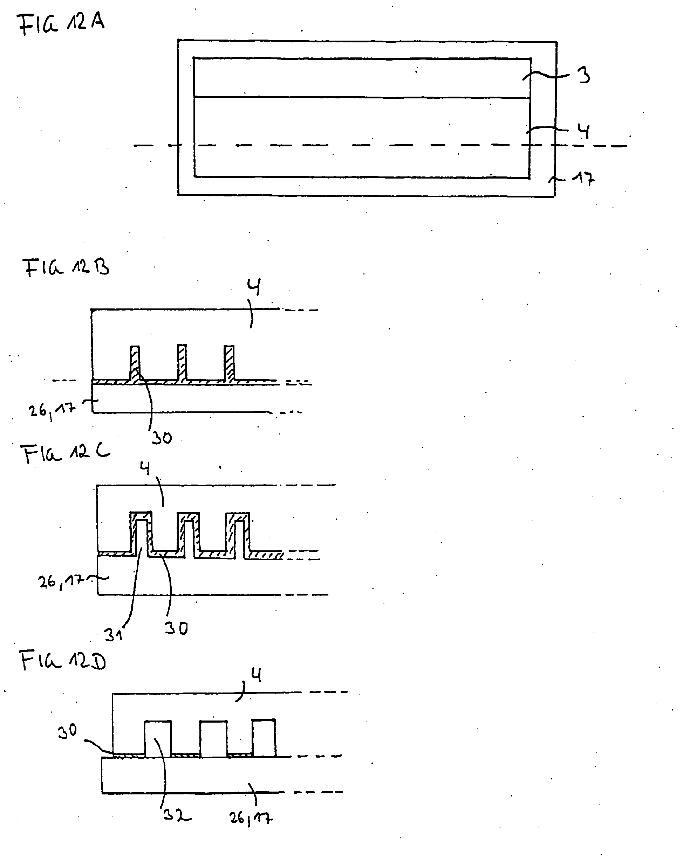

Figur 12A zeigt eine schematische Draufsicht auf die Kristallanordnung 14, wie sie bei einer Laservorrichtung gemäß einem der oben beschriebenen Ausführungsbeispiele Verwendung finden kann. Die Figuren 12B, 12C und 12D zeigen unterschiedliche Möglichkeiten der Verbindung einer Leiterplatte 17 oder eines Wärmeleitelements 26 mit einer Kristallanordnung 14. Die im Zusammenhang mit den Figuren 12B bis 12D beschriebenen Ausführungsbeispiele zeichnen sich durch eine besonders gute thermische Anbindung der Kristallanordnung 14 an die Leiterplatte 17 und/oder das Wärmeleitelement 26 aus.

Im in Verbindung mit der Figur 12B beschriebenen Ausführungsbeispiel ist ein Füll- und/oder Verbindungsmaterial 30 in die Sägegräben 9 der Kristallanordnung 14 gefüllt. Beispielsweise handelt es sich bei dem Füllmaterial 30 um ein Epoxidmaterial, das eine Wärme leitende Füllung wie etwa Wärme leitende, metallische Partikel enthält. Die Kristallanordnung 14 ist mittels des Füllmaterials 30 auf der Leiterplatte 17 oder dem Wärmeleitelement 26 befestigt.

Im in Verbindung mit der Figur 12C beschriebenen Ausführungsbeispiel weist die Leiterplatte 17 bzw. das Wärmeleitelement 26 Vorsprünge 31 auf, die beispielsweise kammartig ausgebildet sind. Die Vorsprünge 31 sind in das Material der Leiterplatte 17 bzw. des Wärmeleitelements 26 strukturiert und einstückig mit diesem ausgebildet. Die kammartigen Vorsprünge 31 greifen in die Sägegräben 9 der Kristallanordnung 14 ein. Die Kristallanordnung 14 ist mittels eines Füllmaterials 30, wie es weiter oben beschrieben ist, mit der Leiterplatte 17 bzw. dem Wärmeleitelement 26 verbunden.

Im in Verbindung mit der Figur 12D beschriebenen Ausführungsbeispiel bleiben die Sägegräben ungefüllt. Das heißt, die Sägegräben 9 sind frei von einem Füll- und Verbindungsmaterial 30. In diesem Ausführungsbeispiel ist die Kristallvorrichtung 14 durch die die Kristallvorrichtung 14 umströmende Luft kühlbar.

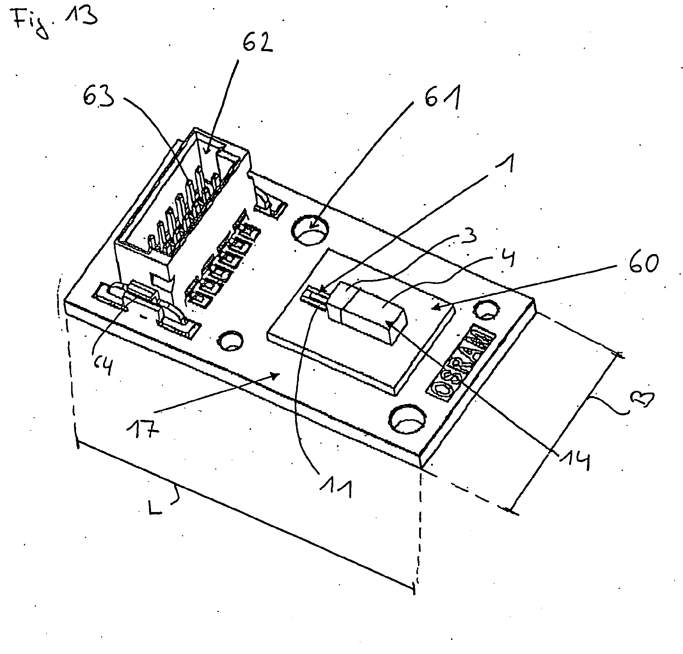

Figur 13 zeigt eine schematische Perspektivdarstellung eines weiteren Ausführungsbeispiels einer hier beschriebenen Laservorrichtung gemäß der Erfindung.

Bei der Laservorrichtung gemäß dem Ausführungsbeispiel der Figur 13 ist die Leiterplatte 17 durch eine Metallkernplatine gebildet. Die Metallkernplatine enthält beispielsweise Kupfer, Aluminium und/oder ein keramisches Material.

Die Leiterplatte 17 weist Bohrungen 61 auf. Mittels der Bohrungen 61 kann die Leiterplatte beispielsweise durch Presspassung und/oder Verschrauben auf einen Kühlkörper justiert und mechanisch befestigt werden.

Auf die Leiterplatte 17 ist ein Wärmeleitelement 60 aufgebracht. Das Wärmeleitelement 60 ist vorzugsweise auf die Leiterplatte 17 geklebt oder aufgelötet. Das Wärmeleitelement 60 besteht oder enthält vorzugsweise eines der folgenden Materialien: Aluminiumnitrid, Silizium, DBC (Direct Bonded Copper) oder einen anderen Kupferkeramikverbundwerkstoff.

Auf das Wärmeleitelement ist eine Pumpquelle 1 aufgebracht, die auch wie weiter oben beschrieben auf ein zusätzliches Wärmeleitelement 11 befestigt sein kann. Der Pumpquelle 1 ist in ihrer Abstrahlrichtung eine Kristallanordnung 14 mit zumindest einem Gainkristall 3 und zumindest einem Frequenzkonversionskristall 4 nachgeordnet. Die Kristallanordnung 14 ist dabei gemäß einem der oben beschriebenen Ausführungsbeispiele ausgebildet.

Die Pumpquelle 1 kann beispielsweise mittels Vias oder Durchbrüchen im Wärmeleitelement 60 mit der Leiterplatte 17 elektrisch leitend verbunden sein.

Ferner können auf der Leiterplatte 17 Bauelemente 64 angeordnet sein, die beispielsweise einen ESD-Schutz für die Pumpquelle 1 bilden. Dabei kann es sich bei den Bauelementen 64 um beispielsweise zumindest einen Widerstand und /oder zumindest einen Varistor handeln.

Eine elektrische Kontaktierung der Laservorrichtung von außerhalb der Leiterplatte kann mittels der Anschlusspins 63 des Gegensteckers 62 erfolgen.

Weiter kann auf der Leiterplatte eine nicht dargestellte Steuervorrichtung - beispielsweise ein Mikrocontroller - angeordnet sein, der beispielsweise den Strom durch die Pumpquelle 1 abhängig von Messwerten wie dem elektrischen Widerstand der Pumpquelle 1 oder der mittleren Temperatur der Leiterplatte 17 regelt und/ oder steuert. Solche Regel- und Steuersignale können alternativ oder zusätzlich auch mittels der Anschlusspins 63 in die Laservorrichtung eingeprägt werden.

Die Leiterplatte 17 der in Verbindung mit Figur 13 beschriebenen Laservorrichtung weist vorzugsweise eine Länge L zwischen 15 und 35 mm, vorzugsweise zwischen 25 und 30 mm, beispielsweise 28 mm auf. Die Breite B der Laservorrichtung beträgt beispielsweise zwischen 7 und 20 mm, bevorzugt zwischen 12 und 17 mm, beispielsweise 15 mm.

Die Erfindung ist nicht durch die Beschreibung anhand der Ausführungsbeispiele beschränkt. Vielmehr umfasst die Erfindung jedes neue Merkmal sowie jede Kombination von Merkmalen, was insbesondere jede Kombination von Merkmalen in den Patentansprüchen beinhaltet, auch wenn dieses Merkmal oder diese Kombination selbst nicht explizit in den Patentansprüchen oder Ausführungsbeispielen angegeben ist.

**Patentansprüche**

1. Laservorrichtung, aufweisend

   - eine Kristallanordnung (14), umfassend einen Laser-Gain-Kristall (3) und einen optisch nicht linearen Frequenzkonversionskristall (4), und
   - eine Pumpquelle (1), die geeignet ist, wenigstens zwei räumlich voneinander getrennte Pumpstrahlen (2) in die Kristallanordnung (14) einzukoppeln,
   **dadurch gekennzeichnet, dass**
   die Kristallanordnung (14) zwischen jeweils zwei in die Kristallanordnung (14) eingekoppelten Pumpstrahlen (2) einen Sägegraben (9) aufweist, der parallel zu den Pumpstrahlen (2) verläuft.

2. Laservorrichtung nach Anspruch 1, bei der die Kristallanordnung (14) einen Resonator für wenigstens zwei Laserstrahlen (15) bildet.

3. Laservorrichtung nach Anspruch 2, bei der die Kristallanordnung (14) einen Plan-Plan-Resonator bildet.

4. Laservorrichtung nach einem der Ansprüche 1 bis 3, bei der für jeden Laserstrahl (15) in der Kristallanordnung (14) eine thermische Linse vorgesehen ist.

5. Laservorrichtung nach einem der Ansprüche 1 bis 4, bei der die Zahl der aus der Kristallanordnung (14) ausgekoppelten Laserstrahlen (15) der Zahl der in die Kristallanordnung eingekoppelten Pumpstrahlen (2) entspricht.

6. Laservorrichtung nach einem der Ansprüche 1 bis 5,

bei der der Frequenzkonversionskristall (4) geeignet ist, die Frequenz zumindest eines Teils der in ihn eingekoppelten elektromagnetischen Strahlung zu erhöhen.

7. Laservorrichtung nach Anspruch 6, bei der der Frequenzkonversionskristall (4) geeignet ist, die Frequenz zumindest eines Teils der in ihn eingekoppelten elektromagnetischen Strahlung mindestens zu verdoppeln.

8. Laservorrichtung nach einem der Ansprüche 1 bis 7, bei der der Gain-Kristall (3) zumindest einen der folgenden Kristalle umfasst: Nd:YVO$_4$-Kristall, Nd:YAG-Kristall.

9. Laservorrichtung nach einem der Ansprüche 1 bis 8, bei der der Frequenzkonversionskristall (4) einen der folgenden Kristalle umfasst: SLN, SLT, KTP, RTP, KTA, RTA, CTA.

10. Laservorrichtung nach einem der vorherigen Ansprüche, bei der der Strahlengang der Pumpstrahlen (2) zwischen Pumpstrahlquelle (1) und Kristallanordnung (14) frei von optischen Elementen ist.

11. Laservorrichtung nach einem der vorherigen Ansprüche, bei der zwischen Pumpquelle (1) und Kristallanordnung (14) eine plan-konvexe asphärische Zylinderlinse (7) angeordnet ist.

12. Laservorrichtung nach Anspruch 11, bei der die Linse (7) ein auf GaP-basierendes Halbleitermaterial enthält.

13. Laservorrichtung nach Anspruch 11 oder 12, bei der zwischen der Zylinderlinse (7) und der Kristallanordnung (14) im Strahlengang eines Pumpstrahls (2) eine weitere Linse (8) angeordnet ist.

14. Laservorrichtung nach einem der Ansprüche 11 bis 13, bei der die Zylinderlinse (7) und die weiteren Linsen (8) in einem gemeinsamen Linsenstab integriert sind.

15. Laservorrichtung nach einem der vorherigen Ansprüche, bei der die Pumpquelle (1) wenigstens einen Diodenlaserbarren umfasst.

16. Laservorrichtung nach einem der vorherigen Ansprüche, bei der die Pumpquelle (1) wenigstens zwei Laserstrahlen (2) erzeugt, die parallel zueinander verlaufen.

17. Laservorrichtung nach einem der vorherigen Ansprüche, bei der die Pumpquelle (1) geeignet ist wenigstens zwei Laserstrahlen (2) gleichzeitig zu erzeugen.

18. Laservorrichtung nach einem der vorherigen Ansprüche, bei der sich die Sägegräben (9) über die gesamte Länge der Kristallanordnung (14) erstrecken.

19. Laservorrichtung nach einem der vorherigen Ansprüche, bei der die Kristallanordnung (14) auf einem Träger (17) angeordnet ist, der zumindest eines der folgenden Materialen enthält: Kupfer, Kupferverbundwerkstoff, Silizium.

20. Laservorrichtung nach Anspruch 19, bei der zwischen Kristallanordnung (14) und Träger (17) zumindest eines der folgenden Befestigungsmittel angeordnet ist: Klebstoff, Weichlot, Hartlot.

21. Laservorrichtung nach einem der vorherigen Ansprüche, bei der auf der Kristallanordnung ein Wärmeleitelement (26) angeordnet ist.

22. Laservorrichtung nach Anspruch 21, bei der das Wärmeleitelement (26) zumindest eines der folgenden Materialien enthält: Kupfer, Kupferverbundwerkstoff, Silizium.

23. Laservorrichtung nach Anspruch 22, bei der zwischen Kristallanordnung (14) und Wärmeleitelement (26) zumindest eines der folgenden Befestigungsmittel angeordnet ist: Klebstoff, Weichlot, Hartlot.

24. Laservorrichtung nach Anspruch 19, bei der der Träger (17) zumindest eine Ausnehmung (50) aufweist, welche die Kristallanordnung (14) zumindest teilweise aufnimmt.

25. Laservorrichtung nach Anspruch 21, bei der das Wärmeleitelement (26) zumindest eine Ausnehmung (51) aufweist, welche die Kristallanordnung (14) zumindest teilweise aufnimmt.

26. Laservorrichtung nach zumindest einem der vorherigen Ansprüche, bei der die Sägegräben (9) ein Füllmaterial (30) enthalten.

27. Laservorrichtung nach Anspruch 19, bei der der Träger (17) zumindest einen Vorsprung (31) aufweist, der in einen Sägegraben (9) der Kristallanordnung (14) eingreift.

28. Laservorrichtung nach Anspruch 21, bei der das Wärmeleitelement (26) einen Vorsprung (31) aufweist, der in einen Sägegraben (9) der Kristallanordnung (14) eingreift.

29. Laservorrichtung nach zumindest einem der vorherigen Ansprüche,
bei der der Kristallanordnung (14) zumindest ein Konkavspiegel (27) nachgeordnet ist.

30. Laservorrichtung nach Anspruch 29,
bei der der Konkavspiegel (27) und die der Pumpquelle (1) zugewandte Strahlungseintrittsfläche (3a) des Gain-Kristall (4) einen Resonator für einen Laserstrahl (15) bilden.

31. Laservorrichtung nach zumindest einem der Ansprüche 29 oder 30,
bei der jedem Laserstrahl (15) genau ein Konkavspiegel (27) zugeordnet ist.

32. Laservorrichtung nach zumindest einem der Ansprüche 29 bis 31,
bei der die Konkavspiegel als ein zusammenhängender Streifen ausgebildet sind.

33. Laservorrichtung nach zumindest einem der vorherigen Ansprüche,
bei der die Kristalle der Kristallanordnung einen Kristallverbund bilden.

34. Laservorrichtung nach zumindest einem der vorherigen Ansprüche,
bei der zumindest zwei Kristalle der Kristallanordnung einen Abstand zueinander aufweisen.

35. Verwendung einer Laservorrichtung nach einem der vorherigen Ansprüche, für eines der folgenden Geräte: Druckmaschine, Belichtungsanlage, Kopierer, Scanner, Projektor, Anzeigevorrichtung.

**Claims**

1. Laser device comprising

   - a crystal array (14) which comprises a laser gain crystal (3) and an optically non-linear frequency conversion crystal (4), and
   - a pump source (1) which is suitable to couple in at least two pump beams (2), which are spatially separated from each other, into the crystal array (14),
   **characterised in that**
   the crystal array (14) comprises, between in each case two pump beams (2) which are coupled into the crystal array (14), a saw groove (9) which extends in parallel with the pump beams (2).

2. Laser device as claimed in claim 1,
wherein the crystal array (14) forms a resonator for at least two laser beams (15).

3. Laser device as claimed in claim 2,
wherein the crystal array (14) forms a planar-planar resonator.

4. Laser device as claimed in any one of claims 1 to 3,
wherein a thermal lens is provided for each laser beam (15) in the crystal array (14).

5. Laser device as claimed in any one of claims 1 to 4,
wherein the number of laser beams (15) coupled out of the crystal array (14) corresponds to the number of the pump beams (2) coupled into the crystal array.

6. Laser device as claimed in any one of claims 1 to 5,
wherein the frequency conversion crystal (4) is suitable to increase the frequency at least of one part of the electromagnetic radiation coupled into it.

7. Laser device as claimed in claim 6,
wherein the frequency conversion crystal (4) is suitable at least to double the frequency at least of one part of the electromagnetic radiation coupled into it.

8. Laser device as claimed in any one of claims 1 to 7,
wherein the gain crystal (3) comprises at least one of the following crystals: $Nd:YVO_4$-crystal, Nd:YAG-crystal.

9. Laser device as claimed in any one of claims 1 to 8,
wherein the frequency conversion crystal (4) comprises one of the following crystals: SLN, SLT, KTP, RTP, KTA, RTA, CTA.

10. Laser device as claimed in any one of the preceding claims, wherein the beam path of the pump beams (2) is free of optical elements between the pump beam source (1) and the crystal array (14).

11. Laser device as claimed in any one of the preceding claims, wherein a planar-convex aspherical cylinder lens (7) is disposed between the pump source (1) and the crystal array (14).

12. Laser device as claimed in claim 11,
wherein the lens (7) contains a semi-conductor material based on GaP.

13. Laser Device as claimed in Claim 11 or 12,
wherein a further lens (8) is disposed between the cylinder lens (7) and the crystal array (14) in the beam path of a pump beam (2).

14. Laser device as claimed in any one of claims 11 to 13, wherein the cylinder lens (7) and the further lenses (8) are integrated in a common lens bar.

15. Laser device as claimed in any one of the preceding claims, wherein the pump source (1) comprises at least one diode laser bar.

16. Laser device as claimed in any one of the preceding claims, wherein the pump source (1) generates at least two laser beams (2) which extend in parallel with each other.

17. Laser device as claimed in any one of the preceding claims, wherein the pump source (1) is suitable to generate at least two laser beams (2) simultaneously.

18. Laser device as claimed in any one of the preceding claims, wherein the saw grooves (9) extend over the entire length of the crystal array (14).

19. Laser device as claimed in any one of the preceding claims, wherein the crystal array (14) is disposed on a carrier (17) which contains at least one of the following materials: copper, composite copper material, silicon.

20. Laser device as claimed in claim 19, wherein at least one of the following attachment means:

   adhesive, soft solder, hard solder
   is disposed between the crystal array (14) and the carrier (17).

21. Laser device as claimed in any one of the preceding claims, wherein a heat-conducting element (26) is disposed on the crystal array.

22. Laser device as claimed in claim 21, wherein the heat-conducting element (26) contains at least one of the following materials: copper, composite copper material, silicon.

23. Laser device as claimed in claim 22, wherein at least one of the following attachment means:

   adhesive, soft solder, hard solder
   is disposed between the crystal array (14) and the heat-conducting element (26).

24. Laser device as claimed in claim 19, wherein the carrier (17) comprises at least one recess (50) which at least partially receives the crystal array (14).

25. Laser device as claimed in claim 21, wherein the heat-conducting element (26) comprises at least one recess (51) which at least partially receives the crystal array (14).

26. Laser device as claimed in at least one of the preceding claims, wherein the saw grooves (9) contain a filler material (30).

27. Laser device as claimed in claim 19, wherein the carrier (17) comprises at least one protrusion (31) which engages into a saw groove (9) of the crystal array (14).

28. Laser device as claimed in claim 21, wherein the heat-conducting element (26) comprises a protrusion (31) which engages into a saw groove (9) of the crystal array (14).

29. Laser device as claimed in at least one of the preceding claims, wherein at least one concave mirror (27) is disposed downstream of the crystal array (14).

30. Laser device as claimed in claim 29, wherein the concave mirror (27) and the beam-entry surface (3a), facing the pump source (1), of the gain crystal (4) form a resonator for a laser beam (15).

31. Laser device as claimed in at least one of claims 29 or 30, wherein exactly one concave mirror (27) is allocated to each laser beam (15).

32. Laser device as claimed in at least one of claims 29 to 31, wherein the concave mirrors are formed as a connected strip.

33. Laser device as claimed in at least one of the preceding claims, wherein the crystals of the crystal array form a composite crystal.

34. Laser device as claimed in at least one of the preceding claims, wherein at least two crystals of the crystal array are at a mutually spaced disposition.

35. Use of a laser device as claimed in any one of the preceding claims for one of the following devices: printing machine, illuminating system, copier, scanner, projector, display device.

**Revendications**

1. Dispositif laser présentant

- un agencement cristallin (14) comprenant un cristal de gain de laser (3) et un cristal de conversion de fréquence (4) optiquement non linéaire, et

- une source de pompage (1) qui est apte à injecter au moins deux faisceaux de pompe (2), spatialement séparés l'un de l'autre, dans l'agencement cristallin (14),

**caractérisé en ce que**

l'agencement cristallin (14), entre respectivement deux faisceaux de pompe (2) injectés dans l'agencement cristallin (14), présente une tranchée en scie (9) qui s'étend parallèlement aux faisceaux de pompe (2).

2. Dispositif laser selon la revendication 1, dans lequel l'agencement cristallin (14) forme un résonateur pour au moins deux faisceaux laser (15).

3. Dispositif laser selon la revendication 2, dans lequel l'agencement cristallin (14) forme un résonateur plan-plan.

4. Dispositif laser selon l'une quelconque des revendications 1 à 3, dans lequel une lentille thermique est ménagée pour chaque faisceau laser (15) présent dans l'agencement cristallin (14).

5. Dispositif laser selon l'une quelconque des revendications 1 à 4, dans lequel le nombre de faisceaux laser (15) extraits de l'agencement cristallin (14) correspond au nombre de faisceaux de pompe (2) injectés dans l'agencement cristallin.

6. Dispositif laser selon l'une quelconque des revendications 1 à 5, dans lequel le cristal de conversion de fréquence (4) est apte à augmenter la fréquence au moins d'une partie du rayonnement électromagnétique injecté dans lui.

7. Dispositif laser selon la revendication 6, dans lequel le cristal de conversion de fréquence (4) est apte à au moins doubler la fréquence au moins d'une partie du rayonnement électromagnétique injecté dans lui.

8. Dispositif laser selon l'une quelconque des revendications 1 à 7, dans lequel le cristal de gain (3) comprend au moins l'un des cristaux suivants : cristal Nd :YVO$_4$, cristal Nd :YAG.

9. Dispositif laser selon l'une quelconque des revendications 1 à 8, dans lequel le cristal de conversion de fréquence (4) comprend l'un des cristaux suivants : SLN, SLT, KTP, RTP, KTA, RTA, CTA.

10. Dispositif laser selon l'une quelconque des revendications précédentes, dans lequel le trajet des faisceaux de pompe (2) entre la source (1) de faisceaux de pompe et l'agencement cristallin (14) est exempt d'éléments optiques.

11. Dispositif laser selon l'une quelconque des revendications précédentes, dans lequel une lentille cylindrique asphérique plan convexe (7) est disposée entre la source de pompage (1) et l'agencement cristallin (14).

12. Dispositif laser selon la revendication 11, dans lequel la lentille (7) contient un matériau semiconducteur à base de GaP.

13. Dispositif laser selon la revendication 11 ou 12, dans lequel, entre la lentille cylindrique (7) et l'agencement cristallin (14), est disposée une lentille supplémentaire (8) dans le trajet d'un faisceau de pompe (2).

14. Dispositif laser selon l'une quelconque des revendications 11 à 13, dans lequel la lentille cylindrique (7) et les lentilles supplémentaires (8) sont intégrées dans un barreau de lentilles commun.

15. Dispositif laser selon l'une quelconque des revendications précédentes, dans lequel la source de pompage (1) comprend au moins un barre laser de diodes.

16. Dispositif laser selon l'une quelconque des revendications précédentes, dans lequel la source de pompage (1) génère au moins deux faisceaux laser (2) qui s'étendent parallèlement l'un à l'autre.

17. Dispositif laser selon l'une quelconque des revendications précédentes, dans lequel la source de pompage (1) est apte à générer simultanément au moins deux faisceaux laser (2).

18. Dispositif laser selon l'une quelconque des revendications précédentes, dans lequel les tranchées en scie (9) s'étendent sur toute la longueur de l'agencement cristallin (14).

19. Dispositif laser selon l'une quelconque des revendications précédentes, dans lequel l'agencement cristallin (14) est disposé sur un porteur (17), lequel comprend au moins l'un des matériaux suivants : cuivre, matériau composite de cuivre, silicium.

**20.** Dispositif laser selon la revendication 19, dans lequel, entre l'agencement cristallin (14) et le porteur (17), est disposé au moins l'un des moyens de fixation suivants : adhésif, soudure à l'étain, soudure forte.

**21.** Dispositif laser selon l'une quelconque des revendications précédentes, dans lequel un élément conducteur de chaleur (26) est disposé sur l'agencement cristallin.

**22.** Dispositif laser selon la revendication 21, dans lequel l'élément conducteur de chaleur (26) contient au moins l'un des matériaux suivants : cuivre, matériau composite de cuivre, silicium.

**23.** Dispositif laser selon la revendication 22, dans lequel, entre l'agencement cristallin (14) et l'élément conducteur de chaleur (26), est disposé au moins l'un des moyens de fixation suivants : adhésif, soudure à l'étain, soudure forte.

**24.** Dispositif laser selon la revendication 19, dans lequel le porteur (17) présente au moins une exclusion (50), laquelle loge au moins en partie l'agencement cristallin (14).

**25.** Dispositif laser selon la revendication 21, dans lequel l'élément conducteur de chaleur (26) présente au moins une exclusion (51), laquelle loge au moins en partie l'agencement cristallin (14).

**26.** Dispositif laser selon au moins l'une quelconque des revendications précédentes, dans lequel les tranchées en scie (9) contiennent un matériau de remplissage (30).

**27.** Dispositif laser selon la revendication 19, dans lequel le porteur (17) présente au moins une saillie (31) qui avance dans une tranchée en scie (9) de l'agencement cristallin (14).

**28.** Dispositif laser selon la revendication 21, dans lequel l'élément conducteur de chaleur (26) présente une saillie (31) qui avance dans une tranchée en scie (9) de l'agencement cristallin (14).

**29.** Dispositif laser selon au moins l'une quelconque des revendications précédentes, dans lequel au moins un miroir concave (27) est disposé en aval de l'agencement cristallin (14).

**30.** Dispositif laser selon la revendication 29, dans lequel le miroir concave (27) et la surface d'entrée du faisceau (3a), tournée vers la source de pompage (1), du cristal de gain (4) forment un résonateur pour un faisceau laser (15).

**31.** Dispositif laser selon au moins l'une quelconque des revendications 29 ou 30, dans lequel exactement un miroir concave (27) est attribué à chaque faisceau laser (15).

**32.** Dispositif laser selon au moins l'une quelconque des revendications 29 à 31, dans lequel les miroirs concaves sont réalisés en tant qu'une bande continue.

**33.** Dispositif laser selon au moins l'une quelconque des revendications précédentes, dans lequel les cristaux de l'agencement cristallin forment un composite cristallin.

**34.** Dispositif laser selon au moins l'une quelconque des revendications précédentes, dans lequel au moins deux cristaux de l'agencement cristallin présentent un écart l'un par rapport à l'autre.

**35.** Utilisation d'un dispositif laser selon l'une quelconque des revendications précédentes, pour l'un des appareils suivants : machine à imprimer, installation d'éclairage, copieuse, scanner, projecteur, dispositif d'affichage.

## FIG 1A

## FIG 1B

## FIG 1C

## FIG 1D

FIG 2A

FIG 2B

FIG 2C

## FIG 3A

## FIG 3B

## FIG 3C

## FIG 3D

# FIG 4A

# FIG 4B

FIG 5A

FIG 5B

## FIG 6

## FIG 7

FIG 8A

FIG 8B

FIG 8C

FIG 8D

FIG 8E

FIG 9A

40

17

11

1

3

4

5

41

26

42

1

11

3

4

5

17

40

FIG 9B

43

17

42

5

41

5

5

5

5

5

5

44

FIG 10A

FIG 10B

FIG 10C

FIG 10D

FIG 11A

FIG 11B

FIG 11C

FIG 11D

FIG 12A

FIG 12B

FIG 12C

FIG 12D

Fig. 13

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5351259 A

- EP 1204182 A